(19) Europäisches Patentamt
European Patent Office
Office européen des brevets

(11) EP 1 583 796 B1

(12) **EUROPÄISCHE PATENTSCHRIFT**

(45) Veröffentlichungstag und Bekanntmachung des Hinweises auf die Patenterteilung:
**24.10.2007 Patentblatt 2007/43**

(21) Anmeldenummer: **03767826.5**

(22) Anmeldetag: **20.12.2003**

(51) Int Cl.:
***C08K 5/17*** *(2006.01)*

(86) Internationale Anmeldenummer:
**PCT/EP2003/014691**

(87) Internationale Veröffentlichungsnummer:
**WO 2004/065470 (05.08.2004 Gazette 2004/32)**

(54) **STABILISATORSYSTEM ZUR PVC-STABILISIERUNG**

STABILIZER SYSTEM FOR STABILIZING PVC

SYSTEME DE STABILISANT CONCU POUR STABILISER DU PVC

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**LT LV**

(30) Priorität: **17.01.2003 DE 10301675**

(43) Veröffentlichungstag der Anmeldung:
**12.10.2005 Patentblatt 2005/41**

(73) Patentinhaber: **Chemtura Vinyl Additives GmbH**
**68623 Lampertheim (DE)**

(72) Erfinder:
- **HOPFMANN, Thomas**
  **68623 Lampertheim (DE)**
- **FRIEDRICH, Hans-Helmut**
  **64686 Lautertal-Gadernheim (DE)**
- **KUHN, Karl-Josef**
  **64686 Lautertal-Gadernheim (DE)**
- **WEHNER, Wolfgang**
  **64673 Zwingenberg (DE)**

(74) Vertreter: **Wibbelmann, Jobst**
**Wuesthoff & Wuesthoff**
**Patent- und Rechtsanwälte**
**Schweigerstrasse 2**
**81541 München (DE)**

(56) Entgegenhaltungen:
**EP-A- 1 046 668**
**WO-A-02/48249**
**US-B1- 6 211 270**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 583 796 B1

Printed by Jouve, 75001 PARIS (FR)

**Beschreibung**

Die Erfindung betrifft Stabilisatormischungen, umfassend mindestens ein Alkanolamin, mindestens ein Uracil und ggf. ein Perchlorat-Salz, die sich zur Stabilisierung chlorhaltiger Polymere eignen.

PVC kann durch eine Reihe von Zusatzstoffen stabilisiert werden. Verbindungen der Schwermetalle Blei, Barium und Cadmium sind dafür besonders gut geeignet, sind jedoch heute aus ökologischen Gründen oder wegen ihres Schwermetallgehalts umstritten (vgl. "Plastics Additives Handbook" H. Zweifel, Carl Hanser Verlag, 5. Aufl., 2001, Seiten 427-483 und "Kunststoff Handbuch PVC", Band 2/1, W. Becker/D. Braun, Carl Hanser Verlag, 2. Aufl., 1985, Seiten 531 - 538; sowie Kirk-Othmer: "Encyclopedia of Chemical Technology", 4th Ed., 1994, Vol. 12, Heat Stabilizers, S. 1071 - 1091). Die Verwendung dieser Stabilisatoren stösst bei Verarbeitern und Verbrauchern zunehmend auf Ablehnung.
Man sucht daher weiter nach wirksamen Stabilisatoren und Stabilisatormischungen, welche frei von Blei, Barium und Cadmium sind. Dabei soll auch eine Stabilisatorzusammensetzung gegen den thermischen und/ oder photochemischen Abbau zur Verfügung gestellt werden, die als Bestandteil von halogenhaltigen Polymeren sowohl eine ausgezeichnete Anfangsfarbe als auch Farbstabilität bietet.

Dabei kann entsprechend der gestellten Anforderungen, sei es aus Gründen der Arbeitshygiene, Zulassungsbeschränkungen oder Verarbeitungssicherheit, eine der Verarbeitung angepasste Rezeptur bereitgestellt werden.
Im Rahmen dieser Erfindung wurden überraschenderweise Kombinationen von in Kunststoffen physiologisch unbedenklichen Substanzen gefunden, die zum Teil alleine überhaupt keine zufrieden stellende Verarbeitungsstabilität zeigen.

In der Schrift WO 02/48249 A2 des Anmelders sind Verbindungen der Formel(I) in Kombination mit mindestens einem Perchlorat-Salz offenbart. Die Vergleichs- und Patentbeispiele dieser Schrift zeigen, dass Verbindungen der allgemeinen Formel (I) alleine eingesetzt, keinen Beitrag zu einer akzeptablen Anfangsfarbe haben.

Es wurde nun gefunden, dass sich Mischungen, aus a) mindestens einem Alkanolamin oder ein Umsetzungsprodukt aus einem mono- oder polyfunktionellen Epoxid und Ammoniak oder einem mono- oder polyfunktionellen Dialkyl (Aryl)- oder Monoalkyl(Aryl)amin der allgemeinen Formel (I), und b) mindestens einem Uracil der allgemeinen Formel (II) bzw. deren Vorstufen der allgemeinen Formel(III), und gegebenenfallseinem Perchlorat-Salz, insbesondere(Erd)/ Alkali-Perchlorat, besonders gut zur Stabilisierung von chlorhaltigen Polymeren, insbesondere PVC, eignen. Die geforderte Aufgabenstellung, die Bereitstellung einer Stabilisatormischung, die den Anforderungen an die Anfangsfarbe gerecht wird, wurde durch diese neue Kombination erfüllt. Gegebenenfalls kann durch weitere Zugabe von einem Perchlorat-Salz, insbesondere einem Erdalkali- oder Alkali-Perchlorat, die Stabiliserung von chlorhaltigen Polymeren, insbesondere PVC, verbessert werden.
Die alleinige Verwendung anderer Klassen von Aminen ohne Perchlorat ergibt keine zufrieden stellende Verarbeitungsstabilität, insbesondere die Anfangsfarbe der gewünschten Formkörper unterschiedet sich nicht wesentlich von einer unstabilisierten Probe, und erfüllt damit nicht die von Verarbeitern gewünschten Anforderungen an gute Anfangsfarbe und Prozesssicherheit.
Die eingesetzten β-Hydroxyalkanolamine in Kombination mit den Uracilen der Struktur (II) oder deren Vorstufen der Struktur (III) können die Funktion eines Anfangfarbenverbesserers einnehmen. Dadurch können Formkörper mit Gebrauchseigenschaften hergestellt werden, die den Ansprüchen über einen längeren Zeitraum Rechnung tragen.
Außerdem wurde überraschenderweise gefunden, dass auch in Systemen mit Perchlorat eine synergistische Wirkung der beanspruchten Kombination vorliegt, die über die Wirkung von vergleichenden Rezepturen der Einzelkomponenten hinausgeht.

Ein Gegenstand der vorliegenden Erfindung sind daher Stabilisatormischungen, umfassend mindestens

a) ein Alkanolamin oder und ein Umsetzungsprodukt aus einem mono- oder polyfunktionellen Epoxid und Ammoniak oder einem mono- oder polyfunktionellen Dialkyl(Aryl)- oder Monoalkyl(Aryl)amin der Formel (I) und

b) ein Uracil der Formel (II) oder dessen Vorstufe der Formel (III) und gegebenenfalls

c) ein Perchlorat-Salz.

Worin für das Alkanolamin der Formel (I)

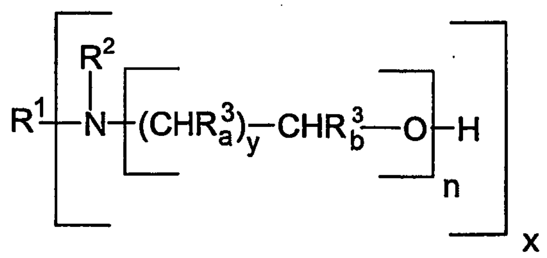

bedeuten
x = 1, 2 oder 3;
y = 1, 2, 3, 4, 5 oder 6;
n= 1-10;
$R^1$,$R^2$ = unabhängig voneinander H, $C_1$-$C_{22}$-Alkyl, -[-($CHR^3_a$)$_y$-$CHR^3_b$-O-]$_n$-H, -[-($CHR^3_a$)$_y$-$CHR^3_b$-O-]$_n$CO-$R^4$, $C_2$-$C_{20}$-Alkenyl, $C_2$-$C_{18}$-Acyl, $C_4$-$C_8$-Cycloalkyl, welches in β-Stellung OH-substituiert sein kann, $C_6$-$C_{10}$-Aryl, $C_7$-$C_{10}$-Alkaryl oder $C_7$-$C_{10}$-Aralkyl, oder wenn x = 1, können $R^1$ und $R^2$ zusätzlich zusammen mit dem N einen geschlossenen 4-10 gliedrigen Ring aus Kohlenstoffatomen und gegebenenfalls bis zu 2 Heteroatomen bilden, oder wenn x = 2, kann $R^1$ zusätzlich für $C_2$-$C_{18}$-Alkylen stehen, das an beiden β-Kohlenstoffatomen mit OH substituiert und/oder durch 1 oder mehrere O-Atome und/oder 1 oder mehrere $NR^2$-Gruppen unterbrochen sein kann, oder für dihydroxysubstituiertes Tetrahydro-dicyclo-pentadienylen, dihydroxysubstituiertes Ethylcyclohexanylen, dihydroxysubstituiertes 4,4'-(Bisphenol-A-dipropylether)ylen, Isophoronylen, Dimethylcyclo-hexanylen, Dicyclohexylmethanylen oder 3,3'-Dimethyldicyclohexylmethanylen stehen, und wenn x = 3, kann $R^1$ zusätzlich für trihydroxysubstituiertes (Tri-N-propylisocyanurat)triyl stehen;
$R^3_a$,$R^3_b$ = unabhängig voneinander $C_1$-$C_{22}$-Alkyl, $C_2$-$C_6$-Alkenyl, $C_6$-$C_{10}$-Aryl, H oder
$CH_2$-X-$R^5$ , wobei X = O, S,
-O-CO- oder -CO-0-;
$R^4$ = $C_1$-$C_{18}$-Alkyl/Alkenyl oder Phenyl; und
$R^5$ = H, $C_1$-$C_{22}$-Alkyl, $C_2$-$C_{22}$-Alkenyl oder $C_6$-$C_{10}$-Aryl.

Ein weiterer Gegenstand der Erfindung sind Stabilisator-mischungen, wobei das Alkanolamin ein Umsetzungsprodukt aus einem mono- oder polyfunktionellen Epoxid und Ammoniak oder einem mono- oder polyfunktionellen Dialkyl (Aryl)- oder Monoalkyl-(Aryl)amin darstellt.

Bei den Alkanolaminen der allgemeinen Formel (I) handelt es sich z.B. um Verbindungen mit $R^1$,$R^2$ = Methyl, Ethyl, Propyl, Butyl, Cyclohexyl, Octyl, Lauryl, Tetradecyl, Hexadecyl, Stearyl, Oleyl, Allyl, Phenyl oder Benzyl, Hydroxyalkyl und $R^3$ = H, Methyl, Ethyl, Propyl oder Butyl. Bevorzugt sind Alkanolamine mit $R^1$ = Lauryl, Tetradecyl, Hexadecyl, Stearyl, Oleyl, wobei $R^2$ = Hydroxyalkyl ist. Weiter können Ethoxylate und Propoxylate von Triethanol- und Triisopropanolamin sowie Fettaminen pflanzlicher oder tierischer Provenienz eingesetzt werden. Bevorzugt sind Trialkanolamine und Mono-Alkyl-/Alkenyl-Dialkanolamine mit $R^3$ = H oder Methyl und y = 1, insbesondere Fettamine, die zweifach mit Ethylen- oder Propylenoxid umgesetzt wurden.
Weitere Verbindungen, die sehr gut geeignet sind, können der nachfolgenden Liste entnommen werden.

Methyl- oder Dimethylamin zweifach oder einfach umgesetzt mit Ethylen- oder Propylenoxid.
Propyl- oder Dipropylamin zweifach oder einfach umgesetzt mit Ethylen- oder Propylenoxid.
Isopropyl- oder Diisopropylamin zweifach oder einfach umgesetzt mit Ethylen- oder Propylenoxid.
Butyl- oder Dibutylamin zweifach oder einfach umgesetzt mit Ethylen- oder Propylenoxid.

Isobutyl- oder Diisobutylamin zweifach oder einfach umgesetzt mit Ethylen- oder Propylenoxid.
Pentyl- oder Dipentylamin zweifach oder einfach umgesetzt mit Ethylen- oder Propylenoxid.
Isopentyl- oder Diisopentylamin zweifach oder einfach umgesetzt mit Ethylen- oder Propylenoxid.
Hexyl- oder Dihexylamin zweifach oder einfach umgesetzt mit Ethylen- oder Propylenoxid.
Isohexyl- oder Diisohexylamin zweifach oder einfach umgesetzt mit Ethylen- oder Propylenoxid.
Heptyl- oder Diheptylamin zweifach oder einfach umgesetzt mit Ethylen- oder Propylenoxid.
Isoheptyl- oder Diisoheptylamin zweifach oder einfach umgesetzt mit Ethylen- oder Propylenoxid.
Octyl- oder Dioctylamin zweifach oder einfach umgesetzt mit Ethylen- oder Propylenoxid.

Isooctyl- oder Diisooctylamin zweifach oder einfach umgesetzt mit Ethylen- oder Propylenoxid.
Nonyl- oder Dinonylamin zweifach oder einfach umgesetzt mit Ethylen- oder Propylenoxid.
Isononyl- oder Diisononylamin zweifach oder einfach umgesetzt mit Ethylen- oder Propylenoxid.
Decyl- oder Didecylamin zweifach oder einfach umgesetzt mit Ethylen- oder Propylenoxid.
Isodecyl- oder Diisodecylamin zweifach oder einfach umgesetzt mit Ethylen- oder Propylenoxid.
Undecyl- oder Diundecylamin zweifach oder einfach umgesetzt mit Ethylen- oder Propylenoxid.

Isoundecyl- oder Diisoundecylamin zweifach oder einfach umgesetzt mit Ethylen- oder Propylenoxid.
Dodecyl- oder Didodecylamin zweifach oder einfach umgesetzt mit Ethylen- oder Propylenoxid.
Isododecyl- oder Diisododecylamin zweifach oder einfach umgesetzt mit Ethylen- oder Propylenoxid.
Tridecyl- oder Ditridecylamin zweifach oder einfach umgesetzt mit Ethylen- oder Propylenoxid.
Isotridecyl- oder Diisotridecylamin zweifach oder einfach umgesetzt mit Ethylen- oder Propylenoxid.
Tetradecyl- oder Ditetradecylamin zweifach oder einfach umgesetzt mit Ethylen- oder Propylenoxid.
Hexadecyl- oder Dihexadecylamin zweifach oder einfach umgesetzt mit Ethylen- oder Propylenoxid.
Octadecyl- oder Dioctadecylamin zweifach oder einfach umgesetzt mit Ethylen- oder Propylenoxid.
Eicosyl- oder Dieicosylamin zweifach oder einfach umgesetzt mit Ethylen- oder Propylenoxid.
Docosyl- oder Didocosylamin zweifach oder einfach umgesetzt mit Ethylen- oder Propylenoxid.
N-Methylbutylamin umgesetzt mit Ethylen- oder Propylenoxid.
N-Ethylbutylamin umgesetzt mit Ethylen- oder Propylenoxid.

Allyl- oder Diallylamin zweifach oder einfach umgesetzt mit Ethylen- oder Propylenoxid.
Crotyl- oder Dicrotylamin zweifach oder einfach umgesetzt mit Ethylen- oder Propylenoxid.
Octadecenyl- oder Dioctadecenylamin zweifach oder einfach umgesetzt mit Ethylen- oder Propylenoxid.
Benzyl- oder Dibenzylamin zweifach oder einfach umgesetzt mit Ethylen- oder Propylenoxid.
Cyclohexyl- oder Dicyclohexylamin zweifach oder einfach umgesetzt mit Ethylen- oder Propylenoxid.
N-Methylcyclohexylamin umgesetzt mit Ethylen- oder Propylenoxid.
N-Ethylcyclohexylamin umgesetzt mit Ethylen- oder Propylenoxid.
4-Vinyl-1-cyclohexen-diepoxid zweifach umgesetzt mit Diethanol- bzw. Diisopropanolamin.
Dicyclopentadien-diepoxid zweifach umgesetzt mit Diethanol- bzw. Diisopropanolamin. Bisphenol A-diglycidylether zweifach umgesetzt mit Diethanol- bzw. Diisopropanolamin.
Trisglycidylisocyanurat dreifach umgesetzt mit Diethanol- bzw. Diisopropanolamin.

Bevorzugt sind Trialkanolamine und Mono-Alkyl/Alkenyl-Dialkanolamine mit $R^3_a$,$R^3_b$ unabhängig voneinander H oder Methyl und y = 1.

Es zeigte sich, dass sich Verbindungen der allgemeinen Formel (I) mit y = 1-6, d.h. mit bis zu 6 Methylengruppen zwischen der Aminogruppe und dem hydroxysubstituierten Kohlenstoffatom, zur Verwendung als PVC-Stabilisator in Kombination mit einem Perchlorat-Salz eignen.

Erfindungsgemäß können auch Verbindungen der allgemeinen Formel (I) eingesetzt werden mit x = 2, die also zwei Hydroxyalkylaminogruppen pro Molekül aufweisen. Beispiele dafür sind u.a. N,N,N',N'-Tetrakis(2-hydroxyethyl) ethylendiamin, N,N,N',N'-Tetrakis(2-hydroxy-1-propyl)ethylendiamin, N,N,N',N'-Tetrakis(2-hydroxyethyl)propylendiamin oder N,N,N',N'-Tetrakis(2-hydroxy-1-propyl)propylendiamin und N,N,N',N'-Tetrakis(2-hydroxyethyl)hexamethylendiamin, wobei Vierfachumsetzungen von 1,6-Hexamethylen- oder 1,8-Octamethylendiamin bzw. Neopentandiamin mit Ethylen- oder Propylenoxid bevorzugt sind oder analoge Umsetzungen von Bis-aminomethylcyclohexan, Isophorondiamin, 4,4'-Diaminodicyclohexylmethan oder 3,3'-Dimethyl-4,4'-diaminodicyclohexylmethan.

Erfindungsgemäß können auch Verbindungen der allgemeinen Formel (I) eingesetzt werden mit x = 3, die also drei Hydroxyalkylaminogruppen pro Molekül aufweisen. Ein Beispiel dafür ist ein Umsetzungsprodukt von Trisglycidylisocyanurat mit Mono- oder Diethanolamin oder Mono- oder Dipropanolamin.

Die Alkanolamine der allgemeinen Formel (I) sind käufliche Chemikalien oder können nach bekannten Methoden durch N-Alkylierung eines entsprechenden Amins oder Ammoniak hergestellt werden (vgl. Kirk-Othmer, Vol. 2, Alkanolamines).

Beispiele für die bevorzugten Alkanolamine der allgemeinen Formel (I) sind Tris(2-hydroxyethyl)amin, Tris(2-hydroxy-1-propyl)amin, Bis(2-hydroxyethyl)-2-hydroxy-1-propylamin, N-irButyl-N,N-bis(2-hydroxyethyl)amin, N,N-Bis (rrbutyl)-N-(2-hydroxyethyl)amin, N-(3-rtButyloxy-2-hydroxy-1-propyl)-N,N-bis(2-hydroxyethyl)amin, N-(i,3-dihydroxy-2-hydroxymethyl-2-propyl)-N,N-bis(2-hydroxyethyl)amin, N,N-Bis(2-hydroxyethyl)-N-palmitylamin, N,N-Bis(2-hydroxyethyl)-N-oleylamin, N,N-Bis(2-hydroxyethyl)-N-stearylamin, , N-(2-Hydroxyethyl)morpholin oder N-(2,3-dihydroxy-1-propyl)morpholin, Bis-hydroxyethylpiperazin oder Bishydroxyisopropylpiperazin und Umsetzungsprodukte von Giycidylethern mit mono-, di-Alkylamin oder Ammoniak sowie den davon abgeleiteten Alkanolaminen, wie beispielsweise Ethanolamin, Diethanolamin, n-Propanolamin, i-Propanolamin, n-Dipropanolamin oder i-Dipropanolamin.

Ganz besonders bevorzugt sind Additionsprodukte von Olefinoxiden wie Octen-, Decen-, Dodecen-, Tetradecen-, Hexadecen-, Octadecen-, Eicosen- und Docosenoxid sowie Epoxystearylalkohol mit Diethanol- oder Diisopropanolamin. Diese Verbindungen mit β-ständiger OH-Funktion an beiden Enden einer längeren Alkylkette wie z. B. N-(2-Hydroxyhexadecyl)-diethanolamin, N-(2-Hydroxy-3-octyloxypropyl)diethanolamin, N-(2-Hydroxy-3-decyloxypropyl) diethanolamin, N-(2-Hydroxy-3-octyloxypropyl)diethanolamin und Bis-N-(2-Hydroxy-3-phenyloxypropyl)ethanolamin eignen sich besonders als Komponente in den erfindungsgemäßen Stabilisatorsystemen.

Die Aufzählung ist nur beispielhaft und erhebt nicht den Anspruch auf Vollständigkeit. Die Verbindungen der Formel (I) sind zur Erzielung der Stabilisierung im chlorhaltigen Polymer zweckmäßig zu 0,01 bis 10 Gew.-%, vorzugsweise zu 0,05 bis 5 Gew.-%, insbesondere zu 0,1 bis 3 Gew.-% zu verwenden.

Die erfindungsgemäße Zusammensetzung weist neben mindestens einem Vertreter der Alkanolamine der Struktur (I), mindestens einen Vertreter der Uracile der allgemeinen Struktur (II) auf. Zur Gruppe der Uracile werden erfindungsgemäß die Derivate gemäß Struktur (II), sowie die Cyanacetylharnstoffe der Struktur (III) als Vorstufen der Uracile benannt.

Verbindungen der Formel (II) sind bereits in DE-A-1 694 873, EP-A-0 065 934, EP-A-0 041479 und EP-A-0 768 336 beschrieben worden, und können nach bekannten Methoden in einem oder mehreren Verfahrensschritt(en) hergestellt werden.

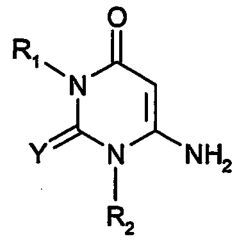

(II),

worin
R1 und R2 unabhängig voneinander für C1-C24-Alkyl,das durch $-CO_2-$ und/ oder 1 bis mehreren Sauerstoffatomen unterbrochen und/ oder 1 bis mehreren OH Gruppen substituiert sein kann, Beispiele hierfür sind $-CH_2-O-CH_2-CH_2-O-CH_3$, $-CH_2-O-CH_2-CH_2-CH_2-O-CH_3$, $-CH_2-O-CH_2-CH_2-CH_2-CH_2-O-CH_3$, $-CH_2-CH_2-O-CH_2-CH_2-O-CH_2-CH_3$, $-CH_2-CH_2-O-CH_2-CH_2-O-CH_2-CH_2-O-CH_2-CH_3$ u.s.w., C3-C24-Alkenyl, verzweigt oder unverzweigt, unsubstituiertes oder mit 1 bis 3 C1-C4-Alkyl-, C1-C4-Alkoxy-, C5-C8-Cycloalkyl- oder mit Hydroxygruppen oder Cl-Atomen substituiertes C5-C8-Cycloalkyl, unsubstituiertes oder am Phenylring mit 1 bis 3 C1-C4-Alkyl-, C1-C4-Alkoxy-, C5-C8-Cycloalkyl- oder mit Hydroxygruppen oder Cl-Atomen substituiertes C7-C9-Phenylalkyl darstellen, und R1 oder R2 zusätzlich für Wasserstoff stehen können, sowie Y S oder O ist. Wobei für Verbindungen der Formel (II) gilt:

C1-C4-Alkyl bedeutet z. B. Methyl, Ethyl, n-Propyl, iso-Propyl, n-, i-, sec- oder t-Butyl. Bevorzugt sind C1-C4-Alkyl, gegebenenfalls durch $-CO_2-$ unterbrochen.
C1-C24-Alkyl bedeutet z. B. ausser den soeben genannten Resten Pentyl, Hexyl, Heptyl, Octyl, 2-Ethylhexyl, i-Octyl, Decyl, Nonyl, Undecyl, Dodecyl, Tetradecyl, Hexadecyl, Octadecyl, Eicosyl, Docosyl oder Tetracosyl.

Beispiele für die Alkenylreste sind Vinyl, Allyl, Methallyl, 1-Butenyl oder 1-Hexenyl, 1-Octenyl,2-Octenyl, Decen, Undecen, Tetradecenyl, Hexadecenyl, Octadecenyl und Eicosenyl, vorzugsweise Allyl. Die Alkyl- oder Alkenylreste können verzweigt oder unverzweigt vorliegen.

C1-C4-Alkoxy bedeutet z. B. Methoxy, Ethoxy, Propoxy, Isopropoxy, Butoxy oder Isobutoxy.
C5-C8-Cycloalkyl bedeutet z. B. Cyclopentyl, Cyclohexyl, Cycloheptyl oder Cyclooctyl. Bei C7-C9-Phenylalkyl handelt es sich beispielsweise um Benzyl, 1- oder 2-Phenylethyl, 3-Phenylpropyl, $\alpha,\alpha$-Dimethylbenzyl oder 2-Phenylisopropyl, vorzugsweise um Benzyl.

Wenn die Cycloalkylgruppen oder die Phenylgruppe der Phenylalkylreste substituiert sind, dann bevorzugt mit zwei oder einem Substituenten, und von den Substituenten vor allem mit Chlor, Hydroxy, Methyl oder Methoxy.
C3-C6-Alkenyl bedeutet z. B. Vinyl, Allyl, Methallyl, 1-Butenyl oder 1-Hexenyl, vorzugsweise Allyl.

Sind die Alkylreste unterbrochen, beinhalten sie notwendigerweise mindestens 2 C-Atome. $-CO_2-$ bedeutet dabei eine Gruppe

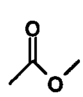

.

Beispiele für durch $-CO_2-$ unterbrochene C1-C22-Alkylreste sind verzweigte oder geradkettige Reste wie z. B. Methoxycarbonylmethyl, Methoxycarbonylethyl, Methoxycarbonylpropyl, Methoxycarbonylbutyl, Methoxycarbonylhexyl, Methoxycarbonyloctyl, Ethoxycarbonylmethyl, Ethoxycarbonylethyl, Ethoxycarbonylpropyl, Ethoxycarbonybutyl, Ethoxycarbonylhexyl, Ethoxycarbonyloctyl, n-Propoxycarbonylmethyl, n-Propoxycarbonylethyl, n-Propoxycarbonylbutyl, n-Propoxycarbonylhexyl, n-Propoxycarbonyloctyl, i-Propoxycarbonylmethyl, i-Propoxycarbonylethyl, i-Propoxycarbonylbutyl, i-Propoxycarbonylhexyl, i-Propoxycarbonyloctyl, n-Butoxycarbonylmethyl, n-Butoxycarbonylethyl, n-Butoxycarbonylbutyl, n-Butoxycarbonylhexyl oder t-Butoxycarbonylmethyl. Diese Uste erhebt keinen Anspruch auf Vollständigkeit, gibt aber, für den Fachmann klar verständlich, das Aufbauprinzip wieder.

Bevorzugt ist beispielsweise Methoxycarbonylethyl.

Bevorzugt sind dabei Verbindungen der Formel (II), worin
R1 und R2 unabhängig voneinander für C1-C18-Alkyl und Wasserstoff stehen. Besonders bevorzugt sind entweder R1 und R2 gleich und bedeuten Methyl, Ethyl, Propyl, Butyl, Allyl oder Octyl, oder sie sind verschieden und bedeuten Ethyl und Allyl.

Falls nur einer der beiden Substituenten R1 oder R2 gleich Wasserstoff ist, so gilt, dass die Kohlenstoffkette des verbleibenden Restes größer als C2 ist, und es gilt dann entsprechend für das mögliche weitere Substitutionsmuster das bereits oben erwähnte. Somit kann R1 oder R2 für C3-C24-Alkyl, das durch -$CO_2$- und/oder 1 bis mehreren Sauerstoffatomen unterbrochen und/oder 1 bis mehreren OH-Gruppen substituiert sein kann, C3-C24-Alkenyl, verzweigt oder unverzweigt, unsubstituiertes oder mit 1 bis 3 Cl-C4-Alkyl-, C1-C4-Alkoxy-, C5-C8-Cycloalkyl- oder mit Hydroxygruppen oder Cl-Atomen substituiertes C5-C8-Cycloalkyl, unsubstituiertes oder am Phenylring mit 1 bis 3 C1-C4-Alkyl-, C1-C4-Alkoxy-, C5-C8-Cycloalkyl- oder mit Hydroxygruppen oder Cl-Atomen substituiertes C7-C9-Phenylalkyl stehen. Bevorzugt sind die in 1 oder 3 Position der Formel (II) monosubstituierten Alkyl, Alkenyl oder Alkoxyalkylderivate, wobei R1 oder R2 Propyl oder Butyl oder Cyclohexyl , oder durch ein Sauerstoffatom unterbrochenes C3-C6-Alkyl ist. Insbesondere bevorzugt sind zum Beispiel : 1-Propyl-2-aminouracil, 1-Propyl-4-aminouracil, 1-Allyl-2-aminouracil, 1-Allyl-4-aminouracil, 1-Methoxyethyl-2-aminouracil, 1-Methoxy-ethyl-4-aminouracil.

Erfindungsgemäß lassen sich auch die synthetischen Vorstufen der Uracile, die Cyanacetylharnstoffe (III) in Kombination mit Stukturen der Formel (I) einsetzen. Diese sind dem Fachmann bekannt und werden in US Patent 2,598,936, der Schrift des Anmelders US 6211270, und J.Org.Chem.16, 1897 -1890 (1951) beschrieben, und können nach bekannten Methoden hergestellt werden. Die Ausgangsharnstoffe sind im Handel erhältlich oder können nach bekannten Verfahren dargestellt werden. Cyanacetylharnstoffe der Formel (III)

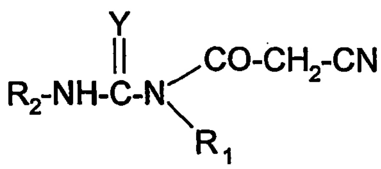

wobei
Y Sauerstoff oder Schwefel ist, und
R1 C1-C24-Alkyl, das durch -$CO_2$- und/oder Sauerstoffatomen unterbrochen und/oder 1 bis 3 OH-Gruppen substituiert sein kann, C3-C24-Alkenyl,
C7-C10-Phenylalkyl, C5-C8-Cycloalkyl, C7-C10-Alkylphenyl, Phenyl oder Naphthyl, wobei der aromatische Rest jeweils durch -OH, C1-C12-Alkyl und/oder -0C1-C4-Alkyl substituiert sein kann, ist, und R2 die Bedeutung von R1 hat oder falls R1 Wasserstoff ist außerdem gelten kann, dass R2 C3-C24-Alkyl, das durch -$CO_2$- und/oder Sauerstoffatomen unterbrochen und/oder 1 bis 3 OH-Gruppen substituiert sein kann, C3-C24-Alkenyl, C7-C10-Phenylalkyl, C5-C8-Cycloalkyl, C7-C10-Alkylphenyl, Phenyl oder Naphthyl, wobei der aromatische Rest jeweils durch -OH, C1-C12-Alkyl und/oder OC1-C4-Alkyl substituiert sein kann, ist, eignen sich besonders gut in der erfindungsgemäß beschriebenen Kombination für die Stabilisierung von chlorhaltigen Polymeren wie z. B. PVC eignen.

Für Verbindungen der Formel (III) gilt:
C1-C4-Alkyl bedeutet z. B. Methyl, Ethyl, n-Propyl, iso-Propyl, n-, i-, sec- oder t-Butyl. C1-C24-Alkyl bedeutet z. B. ausser den soeben genannten Resten Pentyl, Hexyl, Heptyl, Octyl, 2-Ethylhexyl, i-Octyl, Decyl, Nonyl, Undecyl oder Dodecyl. Des weiteren Tetradecyl, Hexadecyl, Octadecyl, Eicosyl, Docosyl oder Tetracosyl. Bevorzugt sind C1-C8-Alkyl, gegebenenfalls durch -$CO_2$- unterbrochen. C5-C8-Cycloalkyl bedeutet zum Beispiel Cyclopentyl, Cyclohexyl, Cycloheptyl oder Cyclooctyl, bevorzugt Cyclohexyl.

C7-C10-Alkylphenyl bedeutet zum Beispiel Tolyl oder Mesityl, insbesondere Tolyl. Bei C7-C10-Phenylalkyl handelt es sich beispielsweise um Benzyl, 1- oder 2-Phenylethyl, 3-Phenylpropyl, $\alpha,\alpha$-Dimethylbenzyl oder 2-Phenylisopropyl, vorzugsweise um Benzyl und 2-Phenethyl, insbesondere um Benzyl.

Wenn der aromatische Rest substituiert ist, dann bevorzugt mit drei, zwei oder insbesondere einem Substituenten, und die Substituenten sind vor allem Hydroxy, Methyl, Ethyl, Methoxy oder Ethoxy.
C3-C8-Alkenyl bedeutet z. B. Allyl, Methallyl, 1-Butenyl, 1-Hexenyl, 1-Octenyl oder 2-Octenyl, vorzugsweise Allyl.

Sind die Alkylreste unterbrochen, beinhalten sie notwendigerweise mindestens 2 C-Atome.
-$CO_2$- bedeutet dabei eine Gruppe

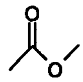

.

Beispiele für durch $-CO_2-$ unterbrochene Alkylreste sind den Ausführungen unter Formel (II) zu entnehmen. Bevorzugt sind dabei Verbindungen der Formel (III), worin
Y Sauerstoff bedeutet, als auch solche, bei denen die Reste R1 und R2 gleich sind. Zweckmässig sind auch Verbindungen, in denen Y Schwefel ist.
Weiterhin bevorzugt sind Verbindungen der Formel (III), worin R1 und R2 C1-C8-Alkyl, C3-C5-Alkenyl, Benzyl oder 2-Phenethyl bedeuten.
Insbesondere bevorzugt sind Verbindungen der Formel (III), worin R1 und R2 C1-C4-Alkyl, Allyl oder Benzyl bedeuten.
Beispielhaft zu nennen wären N,N'-Dimethyl-N-Cyanacetylharnstoff, N,N'-Diethyl-N-Cyanacetylharnstoff, , N, N'-Dioctyl-N-Cyanacetyiharnstoff usw. Diese Liste ist nur beispielhaft, und erhebt keinen Anspruch auf Vollständigkeit.
Bevorzugt sind dabei auch Verbindungen der Formel (III), worin
Y Sauerstoff bedeutet, als auch solche, bei denen die Reste R1 und R2 verschieden voneinander sind. Insbesondere für R 1 = H. R2 steht dann für C3-C12-Alkyl, das durch $-CO_2-$ und/oder Sauerstoffatomen unterbrochen und/oder 1 bis 3 OH-Gruppen substituiert sein kann, C3-C12 Alkenyl, C7-C10-Phenylalkyl, C5-C8-Cycloalkyl, C7-C10-Alkylphenyl, Phenyl oder Naphthyl, wobei der aromatische Rest jeweils durch - OH, C1-C12-Alkyl und/oder OC1-C4-Alkyl substituiert. Zweckmässig sind auch Verbindungen, in denen Y Schwefel ist. Insbesondere bevorzugt sind Verbindungen der Formel (III), worin R1 = H und
R2 = C3-C8-Alkyl, Methoxyethyl, Allyl oder Benzyl bedeuten.
Ausdrücklich genannt sei hier, dass die Umsetzung der Cyanacetylharnstoffe der allgemeinen Formel (III) zu den entsprechenden Uracilen der allgemeinen Formel (II) bereits während der Stabilisatorherstellung erfolgen kann. Dieses ist dem Fachmann literaturbekannt, und ist dem Synthese-prinzip der Darstellung von Uracilen aus Cyanacetylharnstoffen abgeleitet. Beispielsweise wird sich N,N'-Dibutyl-N-Cyanacetylharnstoff (Formel (III): $R^1$ = R2 = Butyl) zu dem analogen 1,3-Dibutyl-4-aminouracil umsetzen. Insbesondere dann, wenn diese Matrix basische Verbindungen enthält. Diese Voraussetzung wird außerdem allein von den weiterhin möglichen Komponenten der Matrix wie zum Beispiel handelsüblichem Calciumstearat oder Zeolith erfüllt. Wobei die Matrix in den gewählten Patentbeispielen, das Alkanolamin allein, oder eine oder mehrere Verbindungen aus der Gruppe der Kunststoffadditive, Kunststoffstabilisatoren und der halogenhaltigen organischen Kunststoffe enthält. Handelt es sich um flüssige Matrixbestandteile, wird diese Umsetzung entsprechend der chemischen Reaktionskinetik beschleunigt.
Besonders geeignet sind dafür bei Raum- oder Verarbeitungstemperatur flüssige Vertreter der allgemeinen Formel (I).
Insbesondere auch Temperaturerhöhungen, hervorgerufen durch Misch- oder Verarbeitungsprozesse, oder hervorgerufen durch die Stabilisatorherstellung, sei es durch Sprüh- oder Schmelzprozesse, unterstützen eine derartige Umsetzung des Cyanacetylharnstoffes zum Uracil. Die Umsetzung muss dabei nicht vollständig ablaufen. Beide Spezies können in unterschiedlichen Verhältnissen nebeneinander vorliegen. Unter bestimmten Bedingungen kann aber auch eine praktisch quantitative Umsetzung ablaufen. Die Wahl der basischen Verbindungen unterliegt an sich keinen Einschränkungen für die intermediäre Umsetzung des Cyanacetytharnstoffes zum Uracil. Alle Verbindungen deren wässriger oder alkoholischer Auszug basisch reagiert, oder auf andere Weise die Umsetzung einleiten, sind geeignet wie zum Beispiel:
Alkali- oder Erdalkalihydroxide, Zeolite, Alcamizer oder Amine. Die Umsetzung kann bereits beim Herstellungsprozess des Stabilisators, beim Mischprozess der Stabilisatorkomponenten allein, oder in Gegenwart der vollständigen Formulierung, sei es im Mischer, oder im weiteren Verlauf der Verarbeitung erfolgen.
Die Verbindungen der Formel (III) sind zur Erzielung der Stabilisierung im chlorhaltigen Polymer zweckmäßig zu 0,01 bis 10 Gew.-%, vorzugsweise zu 0,05 bis 5 Gew.-%, insbesondere zu 0,1 bis 3 Gew.-% zu verwenden.
Ein weiterer Gegenstand der Erfindung umfasst Kombinationen der Stabilisatormischungen umfassend mindestens Alkanolamin oder ein Umsetzungsprodukt aus einem mono- oder polyfunktionellen Epoxid und Ammoniak oder einem mono- oder polyfunktionellen Dialkyl (Aryl)- oder Monoalkyl(Aryl)amin der allgemeinen Formel (I)und Uracilen der Formel (II) oder deren Vorstufen der Formel (III) umfassend mindestens eine halogenhaltige Oxysäure, wie zum Beispiel ein Perchlorat-Salz.
Die Perchlorat-Salze sind dem Fachmann bekannt. Beispiele sind diejenigen der Formel $M(ClO_4)n$, wobei M für Li, Na, K, Mg, Ca, Sr, Ba, Zn, Al, La oder Ce oder ein Hydrotalcitschichtgitterkation oder für ein organisches Oniumsalz-Kation steht. Der Index n ist entsprechend der Wertigkeit von M 1, 2, 3 oder $0 < n \leq 1$ beim Schichtgitterkation des Hydrotalcits.
Die Perchloratsalze können dabei in verschiedenen gängigen Darreichungsformen eingesetzt werden; z. B als Salz oder Lösung in Wasser oder einem organischen Solvens als solches beziehungsweise aufgezogen auf ein Trägermaterial wie PVC, Ca-Silikat, Zeolithe oder Hydrotalcite. Beispiele sind z.B. Perchloratsalze, die mit Alkoholen (Polyolen, Cyclodextrinen) oder Ätheralkoholen bzw. Esteralkoholen oder Kronenether oder Weichmachern komplexiert oder gelöst sind. Zu den Esteralkoholen sind auch die Polyolpartialester zu zählen. Bei mehrwertigen Alkoholen oder Polyolen kommen auch deren Dimere, Trimere, Oligomere und Polymere in Frage, wie Di-, Tri-, Tetra- und Polyglycole, sowie Di-, Tri- und Tetrapentaerythrit oder Polyvinylalkohol in verschiedenen Polymerisationsgraden. Als weitere Lösungsmittel kommen Phosphatester

sowie cyclische und acyclische Kohlensäureester in Frage. Weitere Ausführungsformen werden beschrieben in EP 0 394 547, EP 0 457 471 und WO 94/24200. Die Struktur der Perchloratsalze kann je nach dem angewendeten Trägermaterial oder Verfahren zur Trägerung sowohl amorph als auch teilkristallin oder kristallin vorliegen. Gemische der verschiedenen Aggregatzustände sind ebenfalls dem Fachmann bekannt.

Vorzugsweise werden Natrium/Kaliumperchlorat- Salze verwendet.

Die Perchlorate können in einer Menge von beispielsweise 0,001 bis 5, zweckmäßig 0,01 bis 3, besonders bevorzugt 0,01 bis 2 Gew.-Teilen, bezogen auf 100 Gew.-Teile PVC, angewandt werden.

Die Verwendung von Ethanolammonium-Perchlorat-Salzen zur Verhinderung von Verfärbungen von chlorhaltigem Harz ist aus JP-A 61-9451 bekannt. Es handelt sich dabei um Perchlorat-Salze mit Ammoniumsalz-Struktur, die durch Zugabe von primären, sekundären oder tertiären Ethanolaminen zu einer Perchlorsäurelösung gewonnen werden können. Ammoniumperchlorat-Salze sind generell hitze- und schockempfindliche Verbindungen und bergen daher eine gewisse Explosionsgefahr, was sie für großtechnische Anwendungen ungeeignet macht.

Ein weiterer Gegenstand der Erfindung umfasst Kombinationen der Stabilisatormischungen aus mindestens einem Alkanolamin oder einem Umsetzungsprodukt aus einem mono- oder polyfunktionellen Epoxid und Ammoniak oder einem mono- oder polyfunktionellen Dialkyl (Aryl)- oder Monoalkyl(Aryl)amin der allgemeinen Formel (I)und Uracilen der Formel (II) oder deren Vorstufen der Formel (III) mit mindestens einem anderen üblichen Additiv bzw. Stabilisator.

Ein weiterer Gegenstand der Erfindung umfasst Kombinationen der Stabilisatormischungen aus mindestens einem Alkanolamin oder einem Umsetzungsprodukt aus einem mono- oder polyfunktionellen Epoxid und Ammoniak oder einem mono- oder polyfunktionellen Dialkyl (Aryl)- oder Monoalkyl(Aryl)amin der allgemeinen Formel (I)und Uracilen der Formel (II) oder deren Vorstufen der Formel (III) mit mindestens einem Perchlorat-Salz und mit mindestens einem anderen üblichen Additiv bzw. Stabilisator.

Die erfindungsgemässen Zusammensetzungen können daher auch mit weiteren üblichen Zusatzstoffen versetzt sein, wie etwa

Polyole und Disaccharidalkohole, Hydroxycarbonsäuren oder deren Salze, Glycidylverbindungen, Hydrotalcite, Zeolithe (Alkali bzw. Erdalkalialumosilikate), Verbindungen aus der Gruppe der Calcium-Aluminium-Hydroxide bzw. deren Hydrate,Verbindungen aus der Gruppe der Calcium-Aluminium-Hydroxo- Hydrogenphosphite bzw. deren Hydrate, Verbindungen aus der Gruppe der Aluminiumhydroxide bzw. deren Hydrate, Verbindungen aus der Gruppe der Calcium-Aluminium-Hydroxo-(Hydrogen)Carbonate bzw. deren Hydrate, Verbindungen aus der Gruppe der Lithium-Schichtgitterverbindungen bzw. deren Hydrate, Füllstoffe, Metallseifen, Alkali und Erdalkali-Verbindungen, Füllstoffe/Pigmente, Gleitmittel, Weichmacher, Phosphite, Pigmente, epoxidierte Fettsäureester und andere Epoxidverbindungen, Flammschutzmittel, Antioxidantien, UV-Absorber, Geliermittel, Kompatibilierhilfen, Antistatika, Antifogging-agents, Lichtschutzmittel, optische Aufheller und Treibmittel. Besonders bevorzugt sind epoxidierte Sojaöle, Erdalkali- oder Aluminiumseifen und Phosphite.

Beispiele für solche zusätzlichen Komponenten sind weiter unten aufgeführt und erläutert (vgl. "Handbook of PVC-Formulating" von E. J. Wickson, John Wiley & Sons, New York 1993).

Die Stabilisierung von chlorhaltigen Polymeren, insbesondere PVC, mittels Hydrocalumiten, Katoiten und Calcium-Aluminium-Hydroxo-Hydrogenphosphlten ist bekannt aus WO 92/13914, WO 93/25613, DE 3 941 902 und DE 4 106 411. Die Verbindungen aus der Gruppe der Calcium-Aluminium-Hydroxide bzw. deren Hydrate sind allgemein in "Ullmann's Encyclopedia of Industrial Chemistry" (5. Auflage, 1986): Vol. A5-Cement and Concrete (S. 505 ff.); Kirk-Othmer "Encyclopedia of Chemical Technology" (4. Auflage, 1993): Vol. 5- Cement (S. 572 ff.); P. Barnes "Structure and Performance of Cements" (Appl. Sci. Publ. N. Y., 1983); F. M. Lea "The Chemistry of Cement and Concrete" (E. Arnold Publ. London, 1971); H. F. W. Taylor "Cement Chemistry" (Acad. Press, London, 1992) - Kap. 6: Hydrated aluminate phases (S. 167 ff.) beschrieben.

Die stabilisierende Wirkung von Lithium-Schichtgitterverbindungen auf PVC ist beispielsweise in EP-A-0 761 756 und in DE-A-4 425 275 beschrieben. Falls gewünscht, können alle diese Verbindungen oberflächen-modifiziert sein.

<u>Polyole und Disaccharidalkohole</u>

Als Verbindungen dieses Typs kommen beispielsweise in Betracht: Pentaerythrit, Dipentaerythrit, Tripentaerythrit, Trimethylolethan, Bistrimethylolpropan, Inosit (Cyclite), Polyvinylalkohol, Bistrimethylolethan, Trimethylolpropan, Sorbit (Hexite), Maltit, Isomaltit, Cellobiit, Lactit, Lycasin, Mannit, Lactose, Leucrose, Tris-(hydroxyethyl)-isocyanurat, Tris-(hydroxypropyl)-isocyanurat, Palatinit, Tetramethylolcyclohexanol, Tetramethylolcyclopentanol, Tetramethylolcyclopyranol, Xylit, Arabinit (Pentite), Tetrite, Glycerin, Diglycerin, Polyglycerin, Thiodiglycerin oder 1-0-$\alpha$-D-Glycopyra-

nosyl-D-mannit-dihydrat. Bevorzugt sind davon die Disaccharidalkohole. Verwendung finden können auch Polyolsirupe, wie Sorbit-, Mannit- und Maltitsirup.

Die Polyole können in einer Menge von beispielsweise 0,01 bis 20, zweckmäßig von 0,1 bis 20 und insbesondere von 0,1 bis 10 Gew.-Teilen bezogen auf 100 Gew.-Teile PVC, angewandt werden.

Hydroxycarbonsäuren

In Betracht kommen Salze oder Gemische von Salzen von Hydroxycarbonsäuren, mit weniger als 4 Hydroxygruppen und weniger als 10 Kohlenstoffatomen. Darunter fallen Verbindungen die ausführlich in der Patentanmeldung WO 02/06389 aufgeführt werden. Besonders effektiv haben sich Verbindungen mit einer oder zwei Hydroxygruppen erwiesen. Weitere Substitutionsmuster wie Aldehyd-, Keto-, Acyl-, Amino-, Aminoalkyl-, Aminoaryl-, und/ oder Halogenidsubstituenten können enthalten sein. Falls die Verbindung zwei oder mehr Säurefunktionen trägt, so ist wenigstens eine davon in der Salzform. Die Salze sind bevorzugt ausgewählt aus der Gruppe Li, K, Na, Ca, Mg, Ba, Sr, Al, Fe, La, Ce, Mn oder Zink. Insbesondere die Salze der Milchsäure wie Natriumlactat, oder Salze der Zitronensäure, werden je nach Anwendung bevorzugt.

Glycidylverbindungen

Sie enthalten die Glycidylgruppe

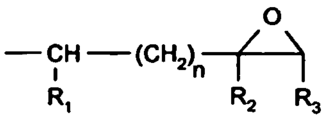 ,

wobei diese direkt an Kohlenstoff, Sauerstoff-, Stickstoff- oder Schwefelatome gebunden ist, und worin entweder $R_1$ und $R_3$ beide Wasserstoff sind, $R_2$ Wasserstoff oder Methyl und n = 0 ist, oder worin $R_1$ und $R_3$ zusammen $-CH_2-CH_2-$ oder $-CH_2-CH_2-CH_2-$ bedeuten, $R_2$ dann Wasserstoff und n = 0 oder 1 ist.

Vorzugsweise finden Glycidylverbindungen mit zwei funktionellen Gruppen Verwendung. Es können aber auch prinzipiell Glycidylverbindungen mit einer, drei oder mehr funktionellen Gruppen eingesetzt werden.
Vorwiegend werden Diglycidylverbindungen mit aromatischen Gruppen eingesetzt. Die endständigen Epoxidverbindungen können in einer Menge von vorzugsweise mindestens 0,1 Teil, beispielsweise 0,1 bis 50, zweckmäßig 1 bis 30 und insbesondere 1 bis 25 Gew.-Teilen, bezogen auf 100 Gew.-Teile PVC, eingesetzt werden.

Hydrotalcite

Die chemische Zusammensetzung dieser Verbindungen ist dem Fachmann bekannt, z. B. aus den Patentschriften DE 3 843 581, US 4,000,100, EP 0 062 813 und WO 93/20135.

Verbindungen aus der Reihe der Hydrotalcite können durch die folgende allgemeine Formel

$$M^{2+}_{1-x}\, M^{3+}_{x}(OH)_2\, (A^{n-})_{x/n} \cdot d\, H_2O$$

beschrieben werden, wobei

$M^{2+}$ = eines oder mehrere der Metalle aus der Gruppe Mg, Ca, Sr, Zn oder Sn ist,
$M^{3+}$ = Al, oder B ist,
$A^n$ ein Anion mit der Valenz n darstellt,
b eine Zahl von 1 - 2 ist,
0 < x 0,5 ist,
m eine Zahl von 0 - 20 ist.

Bevorzugt sind Verbindungen mit

$A^n$ = $OH^-$, $ClO_4^-$, $HCO_3^-$, $CH_3COO^-$, $C_6H_5COO^-$, $CO_3^{2-}$, $(CHOHCOO)_2^{2-}$, $(CH_2COO)_2^{2-}$, $CH_3CHOHCOO^-$, $HPO_3^-$ oder $HPO_4^{2-}$;

Beispiele für Hydrotalcite sind

$Al_2O_3.6MgO.CO_2.12H_2O$ (i), $Mg_{4,5}Al_2(OH)_{13}.CO_3.3{,}5H_2O$ (ii), $4MgO.Al_2O_3.CO_2.9H_2O$

(iii), $4MgO.Al_2O_3.CO_2.6H_2O$,

$ZnO.3MgO.Al_2O_3.CO_2.8\text{-}9H_2O$ und $ZnO.3MgO.Al_2O_3.CO_2.5\text{-}6H_2O$.
Ganz besonders bevorzugt sind die Typen i, ii und iii.

Zeolithe (Alkali bzw. Erdalkalialumosilikate)

Sie können durch die folgende allgemeine Formel $M_{x/n}[(AlO_2)_x(SiO_2)_y].wH_2O$ beschrieben werden, worin n die Ladung des Kations M;
M ein Element der ersten oder zweiten Hauptgruppe, wie Li, Na, K, Mg, Ca, Sr oder Ba;
y : x eine Zahl von 0,8 bis 15, bevorzugt von 0,8 bis 1,2; und
w eine Zahl von 0 bis 300, bevorzugt von 0,5 bis 30, ist.
Beispiele für Zeolithe sind Natriumalumosilikate der Formeln $Na_{12}Al_{12}si_{12}O_{48}$ . 27 $H_2O$ [Zeolith A], $Na_6Al_6Si_6O_{24}$. 2 NaX . 7,5 $H_2O$, X= OH, Halogen, $ClO_4$ [Sodalith]; $Na_6Al_6Si_{30}O_{72}$ . 24 $H_2O$; $Na_8Al_8Si_{40}O_{96}$ . 24 $H_2O$; $Na_{16}Al_{16}Si_{24}O_{80}$ . 16 $H_2O$; $Na_{16}Al_{16}Si_{32}O_{96}$. 16 $H_2O$; $Na_{56}Al_{56}Si_{136}O_{384}$ . 250 $H_2O$ [Zeolith Y], $Na_{86}Al_{86}Si_{106}O_{384}$.264 $H_2O$ [Zeolith X];
oder die durch teilweisen bzw. vollständigen Austausch der Na-Atome durch Li-, K-, Mg-, Ca-, Sr- oder Zn-Atome darstellbaren Zeolithe wie $(Na,K)_{10}Al_{10}Si_{22}O_{64}$. 20 $H_2O$ ; $Ca_{4,5}Na_3[(AlO_2)_{12}(SiO_2)_{12}]$. 30 $H_2O$; $K_9Na_3[(AlO_2)_{12}(SiO_2)_{12}]$. 27 $H_2O$.
Ganz besonders bevorzugt sind Na-Zeolith A und Na-Zeolith P.
Die Hydrotalcite und/oder Zeolithe können in Mengen von beispielsweise 0,1 bis 20, zweckmäßig 0,1 bis 10 und insbesondere 0,1 bis 5 Gew.-Teilen, bezogen auf 100 Gew.-Teile halogenhaltiges Polymere, angewandt werden.

Katoite

Für die erfindungsgemässen Stabilisatorkombinationen geeignete Verbindungen aus der Gruppe der Katoite können durch die allgemeine Formel beschrieben werden

$$Ca_3Al_2(OH)_{12} \cdot mH_2O,$$

wobei
m = 0- 10 bedeuten.

Die genannten Verbindungen können gegebenenfalls oberflächenmodifiziert sein. Sie haben ein ganz bestimmtes Kristallgitter (sogenannte Hydrogranatstruktur), wodurch sie sich von anderen Calcium-Aluminium-Hydroxyverbindungen unterscheiden. Dieses Kristallgitter samt Gitterabständen wird in dem Artikel von C. Cohen-Addad et P. Ducros in Acta Cryst. (1967), 23, Seiten 220 bis 225 beschrieben. Diese können beispielsweise in Anlehnung an die deutsche Patentschrift DE 2 424 763 dargestellt werden.

Hydrocalumite

Für die erfindungsgemässen Stabilisatorkombinationen geeignete Verbindungen aus der Gruppe der Hydrocalumite werden durch die allgemeine Formel beschrieben:

$$Ca_xAl(OH)_{2x+3} \cdot mH_2O,$$

wobei
x = 1 - 4 und
m = 0 - 8 bedeuten,

Bevorzugte Verbindungen sind solche, bei denen in der obigen allgemeinen Formel
x = 2 oder 3 ist.

Calcium-Aluminium-Hydroxy-(Hydrogen)phosphite

Geeignete Verbindung aus der Gruppe der basischen CHAP Calcium-Aluminium-Hydroxy-Hydrogenphosphite entsprechen der allgemeinen Formel

$$Ca_xAl_2(OH)_{2(x+2)}HPO_3 \cdot mH_2O,$$

wobei
x = 2 - 8 und
m = 0 - 12 bedeuten, oder
$Ca_xAl_2(OH)_{2(x+3-y)}(HPO_3)_y \cdot mH_2O$, wobei
x = 2 - 12,

$$\frac{2x+5}{2} > y > 0 \text{ und } > 0 \text{ und}$$

m = 0 - 12 bedeuten,
ausgenommen y = 1, wenn x = 2 - 8 ist,

Weitere Beispiele der Hydrocalumite, die durch Variation des Metallkations M und der Säureanionen A oder B der unterliegen allgemeinen Formel

$$M^{2+}{}_{(2+x)}Al^{3+}{}_{(1+y)}(OH)_{(6+z)}A^{j-}{}_a[B_r]^{nl*}mH2O$$

und werden ausführlich in der Patentschrift WO 02/098964. Seiten 18- 20, beschrieben. In einer bevorzugten Ausführungsform steht M für Kalzium, das gegebenenfalls im Gemisch mit Magnesium oder Zink oder Magnesium und Zink vorliegen kann. Im Rahmen der bevorzugten Form wird die Zusammensetzung frei von dem Schwermetall Zink gewählt. Wenn eine Oberflächenbehandlung gewünscht wird, kann das Produkt mit dem Fachmann bekannten Methoden und Reagenzien entsprechend modifiziert werden.

Lithium- Schichtgitterverbindungen

Lithium-Aluminium-Schichtgitterverbindungen haben die allgemeine Formel A

$$Li_aMII_{(b-2a)}Al_{(2+a)}OH_{(4+2b)}An^{-2/n} \cdot mH_2O$$

worin
MII Mg, Ca oder Zn und
$An^-$ ein ausgewähltes Anion der Wertigkeit n oder ein Gemisch von Anionen ist und die Indizes im Bereich von
0 < a < (b-2)/2,
1 < b < 6 und
m = 0 bis 30
liegen mit der Einschränkung, dass b-2a > 2 ist oder
die allgemeine Formel B

$$[Al_2(Li_{(1-x)} \cdot MII_x)(OH)_6]_n(An^-)_{1+x} \cdot mH_2O$$

worin
MII, A, m und n die obige Bedeutung haben und
x die Bedingung erfüllt $0{,}01 \leq x < 1$.

Die Herstellung der genannten Schichtgitterverbindungen ist dadurch gekennzeichnet, dass man im wässrigen Medium Lithiumhydroxid, -oxid und/oder dessen in Hydroxid umwandelbare Verbindungen, Metall-(II)-hydroxide, -oxide und/oder deren in Hydroxide umwandelbare Verbindungen der genannten Metalle und Aluminiumhydroxide und/oder deren in Hydroxide umwandelbare Verbindungen sowie Säuren und/oder deren Salze bzw. Gemische davon bei einem pH-Wert
von 8 bis 10 und bei Temperaturen von 20 bis 250°C miteinander umsetzt und das erhaltene feste Reaktionsprodukt abtrennt. Die Reaktionszeit beträgt vorzugsweise 0,5 bis 40 Stunden, insbesondere 3 bis
15 Stunden.

Das aus der oben beschriebenen Umsetzung direkt anfallende Reaktionsprodukt kann nach bekannten Verfahren vom wässrigen Reaktionsmedium abgetrennt werden, vorzugsweise durch Filtration. Die Aufarbeitung des abgetrennten Reaktionsproduktes erfolgt ebenfalls in an sich bekannter Weise, beispielsweise durch Waschen des Filterkuchens mit Wasser und Trocknen des gewaschenen Rückstands bei Temperaturen von beispielsweise 60 bis 150°C, vorzugsweise bei 90 bis 120°C. Für die Umsetzung mit Aluminium kann sowohl feinteiliges, aktives Metall-(III)-hydroxid in Kombination mit Natriumhydroxid, als auch ein NaAlO2 eingesetzt werden. Lithium bzw. eine der genannten Metall-(II)-Verbindungen kann in Form von feinteiligem Lithiumoxid oder -hydroxid oder Mischungen daraus bzw. von feinteiligem Metall-(II)-oxid oder -hydroxid oder Mischungen daraus verwendet werden. Die entsprechenden Säureanionen können in unterschiedlich konzentrierter Form z. B. direkt als Säure oder aber als Salz eingesetzt werden.

Die Umsetzungstemperaturen liegen vorzugsweise zwischen etwa 20 und 250°C, weiter im besonderen zwischen etwa 60 und 180°C. Katalysatoren oder Beschleuniger sind nicht erforderlich. Bei den Substanzen kann das Kristallwasser ganz oder teilweise durch thermische Behandlung entfernt werden.

Bei ihrer Anwendung als Stabilisatoren spalten die getrockneten Schichtgitterverbindungen bei den für PVC üblichen Verarbeitungstemperaturen von 160 bis 220°C kein Wasser oder ein anderes Gas ab, so dass in den Formteilen keine störende Blasenbildung auftritt.

Das Anion An in der obigen allgemeinen Formel kann Sulfat, Sulfit, Sulfid, Thiosulfat, Peroxid, Peroxosulfat, Peroxodisulfat, Hydrogenphosphat, Hydrogenphosphit, Carbonat, Halogenide, Nitrat, Nitrit, Hydrogensulfat, Hydrogencarbonat, Hydrogensulfit, Hydrogensulfid, Dihydrogenphosphat, Dihydrogenphosphit, Monocarbonsäureanionen wie Acetat und Benzoat, Amid, Azid, Hydroxid, Hydroxylamin, Hydroazid, Acetylacetonat, Phenolat, Pseudohalogenide, Halogenite, Halogenate, Perhalogenate, Perjodat, Permanganat, Dianionen von Dicarbonsäuren wie Phthalat, Oxalat, Maleat oder Fumarat, Bisphenolate, Phosphat, Pyrophosphat, Phosphit, Pyrophosphit Trianionen von Tricarbonsäuren wie Citrat, Trisphenolate u. v. m. sowie Gemische daraus sein. Unter diesen sind Hydroxid, Carbonat, Phosphit und Maleat bevorzugt.

Zur Verbesserung der Dispergierbarkeit der Substanzen in halogenhaltigen thermoplastischen Polymermassen können dieselben mit einer höheren Fettsäure, z. B. Stearinsäure, einem anionischen oberflächenaktiven Agens, einem Silankuppler, einem Titanat-Kuppler oder einem Glycerinfettsäureester oberflächenbehandelt sein.

Die oben beschriebenen Calcium-Aluminium-Hydroxide, Calcium-Aluminium-Hydroxo-Hydrogenphosphite, Aluminiumhydroxide, Calcium-Aluminium-Hydroxo-(Hydrogen)Carbonate und Lithium-Schichtgitterverbindungen können ausser kristallin auch teilkristallin und/oder amorph vorliegen.

<u>Füllstoffe</u>

Füllstoffe wie beispielsweise Calciumcarbonat, Dolomit, Wollastonit, Magnesiumoxid, Magnesiumhydroxid, Silikate, China-Clay, Talk, Glasfasern, Glaskugeln, Holzmehl, Glimmer, Metalloxide, oder Metallhydroxide, Ruß, Graphit, Gesteinsmehl, Schwerspat, Glasfasern, Talk, Kaolin und Kreide werden verwandt. Bevorzugt ist Kreide (HANDBOOK OF PVC FORMULATING E. J. Wickson, John Wiley & Sons, Inc., 1993, SS. 393 - 449) und Verstärkungsmittel (TASCHENBUCH der Kunststoffadditive, R. Gächter & H. Müller, Carl Hanser, 1990, S. 549 - 615).

Die Füllstoffe können in einer Menge von vorzugsweise mindestens 1 Teil, beispielsweise 5 bis 200, zweckmäßig 10 bis 150 und insbesondere 15 bis 100 Gew.-Teilen, bezogen auf 100 Gew.-Teile PVC, eingesetzt werden.

<u>Metallseifen</u>

Metallseifen sind in der Hauptsache Metallcarboxylate bevorzugt längerkettiger Carbonsäuren. Geläufige Beispiele sind Stearate und Laurate, auch Oleate und Salze kürzerkettiger aliphatischer oder aromatischer Alkancarbonsäuren wie Essigsäure, Propionsäure, Buttersäure, Valeriansäure, Hexansäure, Sorbinsäure; Oxalsäure, Malonsäure, Bernsteinsäure, Glutarsäure, Adipinsäure, Fumarsäure, Zitronensäure, Benzoesäure, Salicylsäure, Phthalsäuren, Hemimellithsäure, Trimellithsäure, Pyromellithsäure.

Als Metalle seien genannt: Li, Na, K, Mg, Ca, Sr, Ba, Zn, Al, La, Ce und Seltenerdmetalle. Oft verwendet man sogenannte synergistische Mischungen wie Barium/Zink-, Magnesium/Zink-, Calcium/Zink- oder Calcium/Magnesium/Zink-Stabilisatoren. Die Metallseifen können einzeln oder in Mischungen eingesetzt werden. Eine Übersicht über gebräuchliche Metallseifen findet sich in Ullmanns Encyclopedia of Industrial Chemistry, 5th Ed., Vol. A16 (1985), S. 361 ff. Neben den genannten Verbindungen kommen auch organische Aluminium-Verbindungen in Frage, außerdem Verbindungen analog den oben erwähnten, Insbesondere Aluminium-tri-stearat, Aluminium-di-stearat und Aluminium-mono-stearat, sowie Aluminiumacetat als auch davon abgeleitete basische Derivate.

Zu den verwendbaren und bevorzugten Aluminium-Verbindungen finden sich weitere Erläuterungen in US 4,060,512 und US 3,243,394.

Neben den bereits genannten Verbindungen, kommen ferner auch organische Seltenerd-Verbindungen, insbesondere Verbindungen analog den oben erwähnten, in Frage. Unter dem Begriff Seltenerd-Verbindung sind vor allem Verbindungen der Elemente Cer, Praseodym, Neodym, Samarium, Europium, Gadolinium, Terbium, Dysprosium, Holmium, Erbium, Thulium, Ytterbium, Lutetium, Lanthan und Yttrium zu verstehen, wobei Gemische insbesondere mit Cer bevorzugt sind. Weitere bevorzugte Seltenerd-Verbindungen finden sich in der EP-A-0 108 023. Die Metallseifen bzw. deren Mischungen können in einer Menge von beispielsweise 0,001 bis 10 Gew.-Teilen, zweckmäßig 0,01 bis 8 Gew.-Teilen, besonders bevorzugt 0,05 bis 5 Gew.-Teilen, bezogen auf 100 Gew.-Teile PVC, angewandt werden.

Alkali und Erdalkali-Verbindungen

Darunter versteht man vornehmlich die Carboxylate der oben beschriebenen Säuren, aber auch entsprechende Oxide bzw. Hydroxide oder Carbonate. Es kommen auch deren Gemische mit organischen Säuren in Frage. Beispiele sind LiOH, NaOH, KOH, CaO, $Ca(OH_2)$, MgO, $Mg(OH)_2$, $Sr(OH)_2$, $Al(OH)_3$, $CaCO_3$ und $MgCO_3$ (auch basische Carbonate, wie beispielsweise Magnesia Alba und Huntit), sowie fettsaure Na- und K-Salze. Bei Erdalkali- und Zn-Carboxylaten können auch deren Addukte mit MO oder $M(OH)_2$ (M = Ca, Mg, Sr oder Zn), sogenannte "overbased" Verbindungen, zum Einsatz kommen. Bevorzugt werden zusätzlich zu den erfindungsgemäßen Stabilisatoren Alkali-, Erdalkali- und/ oder Aluminiumcarboxylate eingesetzt.

Gleitmittel

Als Gleitmittel kommen beispielsweise in Betracht: Montanwachs, Fettsäureester, (ox.)Polyethylenwachse, Polypropylenwachse, (ox.)Paraffinwachse, Amidwachse, Chlorparaffine, Glycerinester oder Erdalkaliseifen, ferner Fettketone sowie Gleitmittel auf Komplexesterbasis oder Kombinationen davon, wie in der Schrift EP 0 259 783 aufgeführt. Weitere verwendbare Gleitmittel darüber hinaus werden in "Plastics Additives Handbook", Carl Hanser Verlag,5th edition, 2001, Seiten 511- 552, genannt.

Weichmacher

Als organische Weichmacher kommen beispielsweise solche aus den folgenden Gruppen in Betracht:

A) Phthalsäureester: wie bevorzugt Di-2-ethylhexyl-, Di-iso-nonyl- und Di-isodecylphthalat, die auch unter den gebräuchlichen Abkürzungen DOP (Dioctylphthalat, Di-2-ethylhexyl-phthalat), DINP (Diisononylphthalat), DIDP (Dilsodecylphthalat) bekannt sind.
B) Ester aliphatischer Dicarbonsäuren, insbesondere Ester von Adipin-, Azelain- und Sebazinsäure: wie bevorzugt Di-2-ethylhexyladipat und Di-iso-octyladipat.
C) Trimellithsäureester, beispielsweise Tri-2-ethylhexyltrimellithat, Tri-isodecyltrimellithat (Gemisch), Tri-iso-tridecyltrimellithat, Tri-iso-octyltrimellithat (Gemisch) sowie Tri-$C_6$-$C_8$-alkyl, Tri-$C_6$-$C_{10}$-alkyl-, Tri-$C_7$-$C_9$-alkyl- und Tri-$C_9$-$C_{11}$-alkyltrimellithate. Gebräuchliche Abkürzungen sind TOTM (Trioctyltrimellitat, Tri-2-ethylhexyl-trimellitat), TIDTM (Triisodecyltrimellitat) und TITDTM (Triisotridecyltrimellitat).
D) Epoxyweichmacher: Genannt seien hier beispielhaft epoxidierte ungesättigte Fettsäuren wie zum Beispiel epoxidiertes Sojabohnenöl, epoxidiertes Leinöl, epoxidiertes Sonnenblumenöl, epoxidiertes Rübol, epoxidiertes Talgöl, epoxidiertes Olivenöl. Als weitere Epoxyfettsäureester seien die Varianten auf Basis der Monoester von Fettsäuren und einwertigen Alkoholen, offenbart in der WO 02/060884 A1, genannt. Weitere Varianten der Epoxyfettsäureester entstehen durch Umesterung von zum Beispiel Triacetin, beschrieben in der DE-A-30 04 660. Darunter fallen die epoxidierten Glyceridacetate, dadurch erhältlich, dass man Epoxyfettsäureester mit Triacetin umestert. Dabei kann das molare Verhältnis so gewählt werden, dass falls gewünscht, die entsprechenden Diglycerid-monoacetate mengenmässig dominieren. Ausführliche Beispiele und Verfahren sind in der Patentschrift WO 02/060884 A1 offenbart. Andere Derivate, wie die Monoglycerid-diacetate, werden auch in ihrer Herstellung in der US-A2- 895 966 offenbart. In der Realität enthalten alle Mischungen wie beschrieben meistens komplexe Gemische aus den Umesterungsreaktionen.
E) Polymerweichmacher: Die gebräuchlichsten Ausgangsmaterialien für die Herstellung der Polyesterweichmacher sind: Dicarbonsäuren wie Adipin-, Phthal-, Azelain- und Sebacinsäure; Diole wie 1,2-Propandiol, 1,3-Butandiol, 1,4-Butandiol, 1,6-Hexandiol, Neopentylglycol und Diethylenglykol.
F) Phosphorsäureester: Eine Definition dieser Ester ist im vorstehend genannten "Taschenbuch der Kunststoffadditive" Kapitel 5.9.5, SS. 408 - 412, zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Kresyldiphenylphosphat, Triphenylphosphat, Trikresylphosphat und Trixylenylphosphat. Bevorzugt sind Tri-2-ethylhexylphosphat sowie Reofos® 50 und 95 (Ciba Spezialitätenchemie).
G) Chlorierte Kohlenwasserstoffe (Paraffine)
H) Kohlenwasserstoffe
I) Monoester, z. B. Butyloleat, Phenoxyethyloleat, Tetrahydrofurfuryloleat und Alkylsulfonsäureester.
J) Glykolester, z. B. Diglykolbenzoate.
K) Vertreter der Zitronensäureweichmacher
Darunter fallen die Zitronensäureester der allgemeinen Formel B, abgeleitet von der 2-Hydroxy-1,2,3-propantricarbonsäure wie in WO 02/05206 beschrieben

$R_1$-O-C-(COOR)($CH_2$-COOR)$_2$ B

wobei

R jeweils für einen geradkettigen oder verzweigten Alkylrest mit 4 bis 18 C-Atomen steht, und R1 = H , oder R1 = R2CO ist. Im Falle von R1 ungleich H, steht R2 für einen geradkettigen oder verzweigten Alkylrest mit 1 bis 10 C-Atomen. Als Alkoholkomponente R des Zitronensäureesters werden bevorzugt C6-C14 Alkanole eingesetzt, die verzweigt oder unverzeigt sein können und deren Alkanolreste gleich oder verschieden sein können.

Beispielhaft und nicht einschränkend seien aufgeführt Triethylcitrat (Citrofol A I), Tributylcitrat (Citrofol B I), Acetyl-triethylcitrat (Citrofol A II), Acetyl-tributylcitrat (Citrofol B II), Acetyltri-n-hexylcitrat, n-Butyryltri-n-hexylcitrat, Acetyltri-n-(hexyl/octyl/decyl)-citrat und Acetyltri-n-(octyl/decyl)-citrat.

L) Perhydrophthal-, -isophthal- und -terephthalester sowie Perhydroglycol- und diglycolbenzoatester. Bevorzugt ist Perhydro-diisononylphthalat (®Hexamoll DINCH - Fa. BASF) wie in DE 19.756.913, DE 19.927.977, DE 19.927.978 und DE 19.927.979 beschrieben.

Eine Definition dieser Weichmacher und Beispiele für solche sind in "Kunststoffadditive", R. Gächter/H. Müller, Carl Hanser Verlag, 3. Aufl., 1989, Kapitel 5.9.6, Seiten 412 - 415, sowie in "PVC Technology ", W. V. Titow, 4th. Ed., Elsevier Publ., 1984, Seiten 165 - 170 angegeben. Es können auch Mischungen unterschiedlicher Weichmacher verwandt werden.

Die Weichmacher können in einer Menge von beispielsweise 5 bis 20 Gew.-Teilen, zweckmäßig 10 bis 20 Gew.-Teilen, bezogen auf 100 Gew.-Teile PVC, angewandt werden. Hart- bzw. Halbhart=PVC enthält bevorzugt bis zu 10 %, besonders bevorzugt bis zu 5 % oder keinen Weichmacher.

Pigmente

Geeignete Stoffe sind dem Fachmann bekannt. Beispiele für anorganische Pigmente sind $TiO_2$, Pigmente auf Zirkonoxidbasis, $BaSO_4$, Zinkoxid (Zinkweiss) und Lithopone (Zinksulfid/Bariumsulfat), Ruß, Russ-Titandioxid-Mischungen, Eisenoxidpigmente, $Sb_2O_3$, $(Ti,Ba,Sb)O_2$, $Cr_2O_3$, Spinelle wie Cobaltblau und Cobaltgrün, Cd(S,Se), Ultramarinblau. Organische Pigmente sind z. B. Azopigmente, Phthalocyaninpigmente, Chinacridonpigmente, Perylenpigmente, Diketo-pyrrolopyrrolpigmente und Anthrachinonpigmente. Bevorzugt ist $TiO_2$ auch in mikronisierter Form. Eine Definition und weitere Beschreibungen finden sich im "Handbook of PVC Formulating", E. J.Wickson, John Wiley & Sons, New York, 1993.

Phosphite

Organische Phosphite sind bekannte Co-Stabilisatoren für chlorhaltige Polymere. Beispiele sind Trioctyl-, Tridecyl-, Tridodecyl-, Tritridecyl-, Tripentadecyl-, Trioleyl, Tristearyl-, Triphenyl-, Trikresyl-, Tris-nonylphenol, Tris-2,4-t-butyl-phenyl- oder Tricyclohexylphosphit.

Weitere geeignete Phosphite sind verschieden gemischte Aryl-dialkyl. bzw. Alkyldiarylphosphite wie Phenyldioctyl-, Phenyldidecyl-, Phenyldidodecyl-, Phenylditridecyl-, Phenylditetradecyl-, Phenyldipentadecyl-, Octyldlphenyl-, Decycldiphenyl-, Undecyldiphenyl-, Dodecyldiphenyl-, Tridecyldiphenyl-, Tetradecyldiphenyl-, Pentadecyldiphenyl-, Oleyldiphenyl-, Stearyldiphenyl- und Dodecyl-bis-2,4-di-t-butylphenylphosphit.

Weiterhin können auch Phosphite verschiedener Di- bzw. Polyole vorteilhaft verwandt werden: z. B. Tetraphenyldipropylenglykoldiphosphit, Polydipropylenglykolphenylphosphit, Tetramethylolcyclohexanol-decyldiphosphit, Tetramethylolcyclohexanolbutoxyethoxy-ethyldiphosphit, Tetramethylolcyclohexanol-nonylphenyldiphosphit, Bisnonylphenyl-di-trimethylolpropandiphosphit, Bis-2-butoxyethyl-di-trimethylolpropandiphosphit, Trishydroxyethylisocyanurat-hexadecyltriphosphit, Didecylpentaerythritdiphosphit, Distearylpentaerythrit-diphosphit, Bis-2,4-di-t-butylphenylpentaerythritdiphosphit, sowie Gemische dieser Phosphite und A-ryl/alkylphosphit-Gemische der statistischen Zusammensetzung $(H_{19}C_9\text{-}C_6H_4)O_{1,5}P(OC_{12,13}H_{25,27})_{1,5}$ oder $[C_8H_{17}\text{-}C_6H_4\text{-}O\text{-}]_2P[i\text{-}C_8H_{17}O]$, $(H_{19}C_9\text{-}C_6H_4)O_{1,5}P(OC_{9,11}H_{19,23})_{1,5}$

Die organischen Phosphite können in einer Menge von beispielsweise 0,01 bis 10, zweckmäßig 0,05 bis 5 und insbesondere 0,1 bis 3 Gew.-Teilen, bezogen auf 100 Gew.-Teile PVC, angewandt werden.

Epoxidierte Fettsäureester und andere Epoxidverbindungen

Die erfindungsgemäße Stablisatorkombination kann zusätzlich vorzugsweise mindestens einen epoxidierten Fettsäureester enthalten. Es kommen dafür vor allem Ester von Fettsäuren aus natürlichen Quellen (Fettsäureglyceride), wie Sojaöl oder Rapsöl, in Frage. Es können aber auch synthetische Produkte zum Einsatz kommen, wie epoxidiertes Butyloleat. Ebenso verwendet werden können epoxidiertes Polybutadien und Polyisopren, gegebenenfalls auch in partiell hydroxylierter Form, oder Glycidylacrylat und Glycidylmethacrylat als Homo- bzw. Copolymer. Diese Epoxyverbindungen

können auch auf eine Alumosalz-Verbindung aufgebracht sein; siehe hierzu auch DE-A-4 031 818.

Antioxidantien

Alkylierte Monophenole, z. B. 2,6-Di-tert-butyl-4-methylphenol, Alkylthiomethylphenole, z. B. 2,4-Di-octylthiomethyl-6-tert-butylphenol, Alkylierte Hydrochinone, z. B. 2,6-Di-tert-butyl-4-methoxyphenol, Hydroxylierte Thiodiphenylether, z. B. 2,2'-Thio-bis-(6-tert-butyl-4-methylphenol), Alkyliden-Bisphenole, z. B. 2,2'-Methylen-bis-(6-tert-butyl-4-methylphenol), Benzylverbindungen, z. B. 3,5,3',5'-Tetra-tert-butyl-4,4'-dihydroxydibenzylether, Hydroxybenzylierte Malonate, z. B. Dioctadecyl-2,2-bis-(3,5-di-tert-butyl-2-hydroxybenzyl)-malonat, Hydroxybenzyl-Aromaten, z. B. 1,3,5-Tris-(3,5-di-tert-butyl-4-hydroxybenzyl)-2,4,6-trimethylbenzol, Triazinverbindungen, z. B. 2,4-Bis-octylmercapto-6-(3,5-di-tert-butyl-4-hydroxyanilino)-1,3,5-triazin, Phosphonate und Phosphonite, z. B. Dimethyl-2,5-di-tert-butyl-4-hydroxybenzylphosphonat, Acylaminophenole, z. B. 4-Hydroxy-laurinsäureanilid, Ester der beta-(3,5-Di-tert-butyl-4-hydroxyphenyl)-propionsäure, der beta-(5-tert-Butyl-4-hydroxy-3-methylphenyl)-propionsäure, der beta-(3,5-Dicyclohexyl-4-hydroxyphenyl)-propionsäure, Ester der 3,5-Di-tert-butyl-4-hydroxyphenylessigsäure mit ein- oder mehrwertigen Alkoholen, Amide der beta-(3,5-Di-tert-butyl-4-hydroxyphenyl)-propionsäure, wie z. B. N,N'-Bis-(3,5-di-tert-butyl-4-hydroxyphenylpropionyl)-hexamethylendiamin, Vitamin E (Tocopherol) und Abkömmlinge.
Die Antioxidantien können in einer Menge von beispielsweise 0,01 bis 10 Gew.-Teilen, zweckmäßig 0,1 bis 10 Gew.-Teilen und insbesondere 0,1 bis 5 Gew.-Teilen, bezogen auf 100 Gew.-Teile PVC, angewandt werden.

UV-Absorber und Lichtschutzmittel

Beispiele dafür sind: 2-(2'-Hydroxyphenyl)-benztriazole, wie z. B. 2-(2'-Hydroxy-5'-methylphenyl)-benztriazol, 2-Hydroxybenzophenone, Ester von gegebenenfalls substituierten Benzoesäuren, wie z. B. 4-tert-Butyl-phenylsalicylat, Phenylsalicylat, Acrylate, Nickelverbindungen, Oxalsäurediamide, wie z. B. 4,4'-Di-octyloxy-oxanilid, 2,2'-Di-octyloxy-5,5'-di-tert-butyl-oxanilid, 2-(2-Hydroxyphenyl)-1,3,5-triazine, wie z. B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, Sterisch gehinderte Amine, wie z. B. Bis (2,2,6,6-tetramethyl-piperidin-4-yl)-sebacat, Bis(2,2,6,6-tetramethyl-piperidin-4-yl)-succinat.

Treibmittel

Treibmittel sind z. B. organische Azo- und Hydrazoverbindungen, Tetrazole, Oxazine, Isatosäureanhydrid, sowie Soda und Natriumbicarbonat. Bevorzugt sind Azodicarbonamid und Natriumbicarbonat sowie deren Mischungen.
Definitionen und Beispiele für Schlagzähmodifikatoren und Verarbeitungshilfen, Geliermittel, Antistatika, Biocide, Metalldesaktivatoren, optische Aufheller, Flammschutzmittel, Antifogging-agents sowie Kompatibilisatoren sind beschrieben in "KunststofFadditive", R. Gächter/H. Müller, Carl Hanser Verlag, 3. Aufl., 1989, "Plastics Additives Handbook" H. Zweifel, Carl Hanser Verlag, 5. Aufl., 2001 und im "Handbook of Polyvinyl Chloride Formulating" E. J. Wilson, J. Wiley & Sons, 1993, sowie in "Plastics Additives" G. Pritchard, Chapman & Hall, London, 1st Ed., 1998. Schlagzähmodifikatoren sind ferner ausführlich beschrieben in "Impact Modifiers for PVC", J. T. Lutz/D. L. Dunkelberger, John Wiley & Sons, 1992.
Ein weiterer Gegenstand der Erfindung sind Zusammensetzungen, die ein chlorhaltiges Polymer und eine erfindungsgemäße Stabilisatormischung enthalten.
Bei diesen Zusammensetzungen sind die Verbindungen der allgemeinen Formeln (I) zur Erzielung der Stabilisierung im chlorhaltigen Polymer zweckmäßig zu 0,01 bis 10, vorzugsweise zu 0,05 bis 5, insbesondere zu 0,1 bis 2 Gew.-Teilen, bezogen auf 100 Gew.-Teile PVC, zu verwenden.
Bei diesen Zusammensetzungen sind die Verbindungen der allgemeinen Formeln (II) zur Erzielung der Stabilisierung im chlorhaltigen Polymer zweckmäßig zu 0,01 bis 10, vorzugsweise zu 0,05 bis 5, insbesondere zu 0,1 bis 2 Gew.-Teilen, bezogen auf 100 Gew.-Teile PVC, zu verwenden.
Bei diesen Zusammensetzungen sind die Verbindungen der allgemeinen Formeln (III) zur Erzielung der Stabilisierung im chlorhaltigen Polymer zweckmäßig zu 0,01 bis 10, vorzugsweise zu 0,05 bis 5, insbesondere zu 0,1 bis 2 Gew.-Teilen, bezogen auf 100 Gew.-Teile PVC, zu verwenden.
Die Perchlorat-Salze können in einer Menge von beispielsweise 0,001 bis 5, zweckmäßig 0,01 bis 3, besonders bevorzugt 0,01 bis 2 Gew.-Teilen, bezogen auf 100 Gew.-Teile PVC, angewandt werden.

Beispiele für die zu stabilisierenden chlorhaltige Polymere sind:

Polymere des Vinylchlorides, Vinylidenchlorids, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; Chlorkautschuke; chlorierte Polymere des Ethylens; Polymere und nachchlorierte Polymere von Chlorbutadiens und deren Copolymere mit Vinylchlorid, chlorierte Natur- und Synthesekautschuke, sowie Mischungen der genannten Polymere unter sich oder mit anderen polymerisierbaren Verbindungen. Im Rahmen dieser Erfindung sind unter PVC auch Copolymerisate mit polymerisierbaren Verbindungen wie Acrylnitril, Vinylacetat oder ABS zu verstehen, wobei es sich um Suspensions-, Masse- oder Emulsionspolymerisate handeln kann. Bevorzugt ist ein PVC-Homopolymer, auch in Kombination mit Polyacrylaten.

Ferner kommen auch Pfropfpolymerisate von PVC mit EVA, ABS und MBS in Betracht. Bevorzugte Substrate sind auch Mischungen der vorstehend genannten Homo-und Copolymerisate, insbesondere Vinylchlorid-Homopolymerisate, mit anderen thermoplastischen oder/und elastomeren Polymeren, insbesondere Abmischungen (Blends) mit ABS, MBS, NBR, SAN, EVA, CPE, MBAS, PMA, PMMA, EPDM und Polylactonen, insbesondere aus der Gruppe ABS, NBR, NAR, SAN und EVA. Die verwandten Abkürzungen für die Copolymerisate sind dem Fachmann geläufig und bedeuten folgendes: ABS: Acrylnitril-Butadien-Styrol; SAN: Styrol-Acrylnitril; NBR: Acrylnitril-Butadien; NAR: Acrylnitril-Acrylat; EVA: Ethylen-Vinylacetat. Es kommen insbesondere auch Styrol-Acrylnitril-Copolymerisate auf Acrylat-Basis (ASA) in Betracht. Bevorzugt als Komponente sind in diesem Zusammenhang Polymerzusammensetzungen, die als Komponenten (i) und (ii) eine Mischung aus 25-75 Gew.-% PVC und 75-25 Gew.-% der genannten Copolymerisate enthalten. Von besonderer Bedeutung sind als Komponente Zusammensetzungen, aus (i) 100 Gewichtsteilen PVC, und (ii) 0 -300 Gewichtsteilen ABS und/oder mit SAN modifiziertes ABS und 0-80 Gewichtsteilen der Copolymeren NBR, NAR und/oder EVA, insbesondere jedoch EVA.

Weiterhin kommen zur Stabilisierung im Rahmen dieser Erfindung auch insbesondere Recyclate chlorhaltiger Polymere in Frage, wobei es sich hierbei um die oben näher beschriebenen Polymere handelt, welche durch Verarbeitung, Gebrauch oder Lagerung eine Schädigung erfahren haben. Geeignet im Rahmen der vorliegenden Erfindung ist besonders bevorzugt ist PVC-Recyclat.

Die erfindungsgemäß mitverwendbaren Verbindungen sowie die chlorhaltigen Polymeren sind dem Fachmann allgemein bekannt und werden detailliert beschrieben in "Kunststoffadditive", R. Gächter/H. Müller, Carl Hanser Verlag, 3. Aufl., 1989; in der DE 197 41 778 und der EP-A 99 105 418.0 vom 17.03.1999, auf welche hiermit ausdrücklich Bezug genommen wird.

Die erfindungsgemäße Stabilisierung für chlorhaltige Polymerzusammensetzungen sind nicht weichgemachte, resp. weichmacherfreie oder im wesentlichen weichmacherfreie Zusammensetzungen.

Die erfindungsgemäßen Zusammensetzungen eignen sich insbesondere, in Form von Hart-Rezepturen, für Hohlkörper (Flaschen), Verpackungsfolien (Tiefziehfolien), Blasfolien, Schutzpolster-Folien ("Crash-Pad", Automobile), Rohre, Schaumstoffe, Schwerprofile (Fensterrahmen), Lichtwandprofile, Bauprofile, Außenwandverkleidungen, Fittinge, Bürofolien und Apparatur-Gehäuse (Computer, Haushaltsgeräte). Bevorzugte andere Zusammensetzungen, in Form von Weich-Rezepturen sind für Drahtummantelungen, Kabelisolierungen, Dekorationsfolien, Dachfolien, Schaumstoffe, Agrarfolien, Schläuche, Dichtungsprofile, Bürofolien und Folien für Traglufthallen geeignet.

Beispiele für die Anwendung der erfindungsgemäßen Zusammensetzungen als Plastisole sind Kunstleder, Fußböden, Textilbeschichtungen, Tapeten, Metallbeschichtungen ("Coil-Coatings") und Unterbodenschutz für Kraftfahrzeuge. Beispiele für Sinter-PVC-Anwendungen der erfindungsgemäßen Zusammensetzungen sind Schalenguß ("Slush"), Metallbeschichtungen und Bandlackierverfahren(" Coil-Coatings") sowie in E-PVC für Luvitherm-Folien.

Zweckmäßig kann die Einarbeitung der Stabilisatoren nach folgenden Methoden erfolgen: als Emulsion oder Dispersion (eine Möglichkeit ist z. B. die Form einer pastösen Mischung, ein Vorteil der erfindungsgemäßen Kombination besteht bei dieser Darreichungsform in der Stabilität der Paste); als Trockenmischung während des Vermischens von Zusatzkomponenten oder Polymermischungen; durch direktes Zugeben in die Verarbeitungsapparatur (z. B. Kalander, Mischer, Kneter, Extruder und dergleichen) oder als Lösung oder Schmelze bzw. als Flakes oder Granulate/Pellets in staubfreier Form als One-Pack.

Das erfindungsgemäß stabilisierte PVC, das die Erfindung ebenfalls betrifft, kann auf an sich bekannte Weise hergestellt werden, wozu man unter Verwendung an sich bekannter Vorrichtungen wie der oben genannten Verarbeitungsapparaturen die erfindungsgemäße Stabilisatormischung und gegebenenfalls weitere Zusätze mit dem PVC vermischt. Hierbei können die Stabilisatoren einzeln oder in Mischung zugegeben werden oder auch in Form sogenannter Masterbatches.

Das nach vorliegender Erfindung stabilisierte PVC kann auf bekannte Weisen in die gewünschte Form gebracht werden. Solche Verfahren sind beispielsweise Mahlen, Kalandrieren, Extrudieren, Spritzgießen oder Spinnen, ferner

Extrusions-Blasen. Das stabilisierte PVC kann auch zu Schaumstoffen verarbeitet werden.

Ein erfindungsgemäß stabilisiertes PVC eignet sich z. B. besonders für Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Außenwandverkleidung, Fittinge, Bürofolien und Apparatur-Gehäuse (Computer, Haushalteräte).

Das erfindungsgemäße PVC eignet sich besonders für Halbhart- und Weich-Rezepturen, insbesondere in Form von Weichrezepturen für Drahtummantelungen, Kabelisolierungen, welche besonders bevorzugt ist. In Form von Halbhart-Rezepturen eignet sich das erfindungsgemäße PVC besonders für Dekorationsfolien, Schaumstoffe, Agrarfolien, Schläuche, Dichtungsprofile und Bürofolien.

Beispiele für die Anwendung des erfindungsgemäßen PVC als Plastisol sind Kunstleder, Fußböden, Textilbeschichtungen, Tapeten, Metallbeschichtungen, Coil-Coatings- und Unterbodenschutz für Kraftfahrzeuge.

Beispiele für Sinter-PVC-Anwendungen des erfindungsgemäß stabilisierten PVC sind Schalenguß und Bandbeschichtung für Plastisol-, Halbhart- und Weich-Rezepturen. Näheres hierzu siehe "Kunststoffhandbuch PVC", Band 2/2, W. Becker/H. Braun, 2. Aufl., 1985, Carl Hanser Verlag, Seiten 1236 - 1277.

Die folgenden Beispiele erläutern die Erfindung, ohne sie jedoch zu beschränken. Teile- und Prozentangaben beziehen sich, wie auch in der übrigen Beschreibung, auf das Gewicht.

Patentbeispiele

Nachfolgend wird die Zusammensetzung von Testrezepturen gemäß den Tabellen wiedergegeben. Die Angaben sind in Gewichtsteilen, bezogen auf 100 Teile PVC Harz.

Entsprechend den Rezepturen wurden aus den jeweiligen Trockenmischungen auf einem Laborextruder Bänder extrudiert. Die Herstellung der Bänder erfolgte, indem man die PVC Pulvermischungen und die genannten Additive mittels der üblichen Heiß-Kalt Mischungstechnik bereitet und auf einem Doppelschneckenextruder homogenisiert und plastifiziert wurden.

Die Extrusionsparameter sind wie folgt: Weber CE-3, konische Doppelschnecke: Schneckendrehzahl 13 Umdrehungen pro Minute, die Temperaturregulierung der einzelnen Zonen: Zylinder in Zone 1: 170°C, Zone 2 bei 165°C, Zone 3 bei 170°C und Zone 4 bei 180°C. Die Temperatur der Düse wurde auf 190°C eingestellt. Düsengeometrie 50 x 2 mm.

Die Anfangsfarbe wurde als Yellowness Index (YI) gemäß ASTM D-1925-70 bestimmt. Die Ergebnisse sind den folgenden Tabellen zu entnehmen. Geringe YI - Werte bedeuten eine gute Stabilisierung.

Eine weitere Bestimmung der Langzeitstabilität erfolgte durch die Ermittlung der thermischen Stabilität gemäß DIN VDE 0472. Das Probestück wurde hierbei in ein unten zugeschmolzenes Glasrohr (AR-Glas der Firma Peco-Laborbedarf GmbH, Darmstadt) in einem Ölbad bei 200°C erwärmt, und die Zeit bei der eine sichtbare . Rotfärbung des pH-Universal-Indikatorpapieres (entsprechend einem pH-Wert von 3) beobachtet wurde, bestimmt.

Eine weitere Bestimmung der Stabilität des PVC erfolgt durch den Dehydrochlorierungstest ("DHC-Test"), welcher in Anlehnung an DIN 53381, BI.3 durchgeführt wurde. Hierbei wurde bei 180°C die Zeit bis zum Anstieg der Dehydrochlorierungskurve auf eine Leitfähigkeit von 200 $\mu$S/cm gemessen.

Patentbeispiel 1

| | A1 | A2 | A3 | A4 | A5 | A6 | A7 |
|---|---|---|---|---|---|---|---|
| PVC (Shin Etsu 6704) | 100 | 100 | 100 | 100 | 100 | 100 | 100 |
| Verbindung 1 | --- | --- | -- | --- | --- | -- | 0,1 |
| Zeolith A | 1,0 | 1,0 | 1,0 | 1,0 | 1,0 | 1,0 | 1,0 |
| Calciumstearat | 0,4 | 0,4 | 0,4 | 0,4 | 0,4 | 0,4 | 0,4 |
| Marklube 367 | 0,6 | 0,6 | 0,6 | 0,6 | 0,6 | 0,6 | 0,6 |
| Licowax PE 520 | 0,6 | 0,6 | 0,6 | 0,6 | 0,6 | 0,6 | 0,6 |
| AC 629 A | 0,1 | 0,1 | 0,1 | 0,1 | 0,1 | 0,1 | 0,1 |
| 1,3-Dimethyl-4-aminouracil | --- | 0,1 | 0,2 | --- | --- | 0,1 | 0,1 |
| TEA | --- | --- | --- | 0,1 | 0,2 | 0,1 | 0,1 |
| Versuchsergebnisse | | | | | | | |

(fortgesetzt)

| | A1 | A2 | A3 | A4 | A5 | A6 | A7 |
|---|---|---|---|---|---|---|---|
| Farbmessung | | | | | | | |
| Yellowness Index Extrusionsband / Anfangsfarbe | rot-violett | 31 | 26 | 73 | 73 | 27 | 23 |
| PVC Shin Etsu 6704, K-Wert 67 (ex Shin Etsu)<br>Verbindung 1 = Mischung aus 9% $NaClO_4$, 45% $CaCO_3$, 40% $CaSiO_3$, 6% $H_2O$<br>Marklube 367 = Paraffinwachs (ex Crompton)<br>Licowax PE 520 = Polyethylenwachs (ex Clariant)<br>AC 629 A = oxidiertes Polyethylenwachs (ex Honeywell)<br>TEA = Triethanolamin als handelsübliches Produkt<br>1,3-Dimethyl-4-aminouracil als handelsübliches Produkt | | | | | | | |

Aus der Tabelle geht hervor, dass die erfindungsgemäße Zusammensetzung A6, gegenüber den Vergleichsmischungen, eine überraschende Stabilisatorwirkung bietet. Ein Ziel dieser Erfindung, die Verbesserung der Anfangsfarbe, wurde hiermit deutlich erfüllt. Für die Beurteilung der Verarbeitungseigenschaften ist vor allem die Anfangsfarbe des Prüfkörpers von Bedeutung um eine ausreichende Verarbeitungsstabilität zu gewährleisten. Bereits kleine Unterschiede im YI Wert sind dabei relevant. Signifikant zeigt sich hier der besondere Effekt einer Kombination aus Verbindungen der Struktur (I) mit Verbindungen der Struktur (II). Die Verbindung der Formel (I) hat, alleine eingesetzt, wie die Vergleichsbeispiele A 4 und A 5 zeigen, keine zufriedenstellende Wirkung auf die Anfangsfarbe des PVC's. Erst in Kombination mit einer Verbindung der Formel (II) wird eine synergistische Wirkung, wie im Beispiel A6 gezeigt, freigesetzt. Es zeigt sich außerdem, dass die Stabilisierung des Polymers durch Verwendung von Alkanolaminen in Kombination mit Uracilen durch Zugabe von Perchloraten wie im erfindungsgemäßen Beispiel A7 ausgeführt, noch weiter gesteigert werden kann.

Patentbeispiel 2

| | A4 | A 5 | B1 | B 2 | B 3 |
|---|---|---|---|---|---|
| PVC (Shin Etsu 6704) | 100 | 100 | 100 | 100 | 100 |
| Verbindung 1 | --- | --- | --- | --- | --- |
| Zeolith A | 1,0 | 1,0 | 1,0 | 1,0 | 1,0 |
| Calciumstearat | 0,4 | 0,4 | 0,4 | 0,4 | 0,4 |
| Marklube 367 | 0,6 | 0,6 | 0,6 | 0,6 | 0,6 |
| Licowax PE 520 | 0,6 | 0,6 | 0,6 | 0,6 | 0,6 |
| AC 629 A | 0,1 | 0,1 | 0,1 | 0,1 | 0,1 |
| N,N'-Dimethyl-N-Cyanacetyl-harnstoff | --- | --- | 0,1 | 0,2 | 0,1 |
| TEA | 0,1 | 0,2 | --- | --- | 0,1 |
| Versuchsergebnisse | | | | | |
| Farbmessung | | | | | |
| Yellowness Index Extrusionsband / Anfangsfarbe | 73 | 73 | 36 | 30 | 28 |
| PVC Shin Etsu 6704, K-Wert 67 (ex Shin Etsu)<br>Verbindung 1 = Mischung aus 9% $NaClO_4$ , 45% $CaCO_3$, 40% $CaSiO_3$, 6% $H_2O$<br>Marklube 367 = Paraffinwachs (ex Crompton)<br>Licowax PE 520 = Polyethylenwachs (ex Clariant)<br>AC 629 A = oxidiertes Polyethylenwachs (ex Honeywell)<br>TEA = Triethanolamin als handelsübliches Produkt | | | | | |

Aus der Tabelle geht hervor, dass die erfindungsgemäße Zusammensetzung B3 gegenüber den Vergleichsmischungen eine Verbesserung der Stabilisatorwirkung bietet. Ein Ziel dieser Erfindung, die Verbesserung der Anfangsfarbe, wurde hiermit deutlich erfüllt. Für die Beurteilung der Verarbeitungseigenschaften ist vor allem der Bereich der Anfangsfarbe des Prüfkörpers von Bedeutung. Signifikant zeigt sich hier der besondere Effekt einer Kombination aus Verbindungen der Struktur (I) mit Verbindungen der Struktur (III).

Patentbeispiel 3/1

Die folgenden Rezepturen wurden auf einem Mischwalzwerk 5 Minuten bei 180°C gewalzt. Vom gebildeten Walzfell wurde eine Pressplatte bei 180°C in einer vorgeheizten Etagen-Plattenpresse hergestellt. Stärke der Pressplatte 1mm, Pressdauer 1 Minute. Der Yellowness Index wurde nach ASTM D-1925-70 bestimmt. Geringe YI-Werte bedeuten eine gute Stabilisierung bzw. Anfangsfarbe. Hohe Prozentwerte eine gute Transparenz.

| | C1 | C2 | C 3 | C 4 | C5 | C6 | C7 |
|---|---|---|---|---|---|---|---|
| Evipol SH 5730 | 100 | 100 | 100 | 100 | 100 | 100 | 100 |
| Paraloid BTA III/ N2 | 5 | 5 | 5 | 5 | 5 | 5 | 5 |
| Paraloid K 120N | 0,5 | 0,5 | 0,5 | 0,5 | 0,5 | 0,5 | 0,5 |
| Paraloid K 175 | 0,5 | 0,5 | 0,5 | 0,5 | 0,5 | 0,5 | 0,5 |
| Wachs E | 0,3 | 0,3 | 0,3 | 0,3 | 0,3 | 0,3 | 0,3 |
| Loxiol G 16 | 1,0 | 1,0 | 1,0 | 1,0 | 1,0 | 1,0 | 1,0 |
| Epox. Sojabohnenöl | 3,0 | 3,0 | 3,0 | 3,0 | 3,0 | 3,0 | 3,0 |
| NaP/ H2O | 0,6 | 0,6 | 0,6 | 0,6 | 0,6 | 0,6 | 0,6 |
| TEA | 0,2 | 0,4 | --- | --- | 0,2 | 0,2 | 0,2 |
| 1,3-Dioctyl-4-aminouracil | --- | --- | 0,1 | 0,3 | 0,1 | 0,2 | 0,2 |
| Mark CH 300 | | | | | | | 0,5 |
| | | | | | | | |
| Farbmessung an Pressplatte 1mm | | | | | | | |
| Yellowness Index YI | 43,8 | 36,1 | 83,1 | 54,4 | 24,4 | 18,4 | 14,8 |
| Transparenz | 90,5 | 91,1 | 78,0 | 89,9 | 92,3 | 93,1 | 92,9 |
| PVC Evipol SH 5730, K-Wert 57 (ex EVC)<br>Paraloid K 175/ K 120N = Acrylat Verarbeitungshilfe (ex Rohm & Haas)<br>Paraloid BTA III/ N2 = Methacrylat-Butadien-Styrol Modifier (ex Rohm & Haas)<br>Wachs E = Esterwachs/ Montanwachs (ex Clariant)<br>Loxiol G 16 = Fettsäurepartialester (ex Henkel)<br>NaP/ $H_2O$ = 30% ige Natriumperchlorat-Lösung in Wasser<br>Mark CH 300 = gemischtes Aryl/ Alkyl-phospit (ex Crompton)<br>TEA = Triethanolamin als handelsübliches Produkt | | | | | | | |

Aus der Tabelle geht hervor, dass die erfindungsgemäße Zusammensetzung C 5 gegenüber den Vergleichsmischungen eine Verbesserung der Stabilisatorwirkung bietet. Es zeigt sich außerdem, dass die Stabilisierung des Polymers durch Verwendung von Alkanolaminen in Kombination mit Uracilen durch Zugabe von Phosphiten wie im erfindungsgemäßen Beispiel C 7 ausgeführt, noch gesteigert werden kann.

Patentbeispiel 3/2

Die Rezepturen wurden auf einem Mischwalzwerk 5 Minuten bei 180°C gewalzt. Vom gebildeten Walzfell wurde eine Pressplatte bei 180°C in einer vorgeheizten Etagen-Plattenpresse hergestellt. Stärke der Pressplatte 1mm, Pressdauer 1 Minute. Der Yellowness Index wurde nach ASTM D-1925-70 bestimmt. Geringe YI- Werte bedeuten eine gute Stabilisierung bzw. Anfangsfarbe. Hohe Prozentwerte eine gute Transparenz.

| | C1 | C2 | C8 | C9 | C10 | C11 | C12 |
|---|---|---|---|---|---|---|---|
| PVC Evipol SH 5730 | 100 | 100 | 100 | 100 | 100 | 100 | 100 |
| Paraloid BTA III/ N2 | 5 | 5 | 5 | 5 | 5 | 5 | 5 |
| Paraloid K120N | 0,5 | 0,5 | 0,5 | 0,5 | 0,5 | 0,5 | 0,5 |
| Paraloid K 175 | 0,5 | 0,5 | 0,5 | 0,5 | 0,5 | 0,5 | 0,5 |
| Wachs E | 0,3 | 0,3 | 0,3 | 0,3 | 0,3 | 0,3 | 0,3 |
| Loxiol G 16 | 1,0 | 1,0 | 1,0 | 1,0 | 1,0 | 1,0 | 1,0 |
| Epox. Sojabohnenöl | 3,0 | 3,0 | 3,0 | 3,0 | 3,0 | 3,0 | 3,0 |
| NaP/ $H_2O$ | 0,6 | 0,6 | 0,6 | 0,6 | 0,6 | 0,6 | 0,6 |
| TEA | 0,2 | 0,4 | --- | --- | 0,2 | 0,2 | 0,2 |
| 1,3-Dimethyl- 4-amino-uracil | --- | --- | 0,1 | 0,3 | 0,1 | 0,2 | 0,2 |
| Phosphit Mark CH 300 | | | | | | | 0,5 |
| | | | | | | | |
| Farbmessung an Pressplatte 1mm | | | | | | | |
| Yellowness Index YI | 43,8 | 36,1 | 55,7 | 24,1 | 16,3 | 14,2 | 11,6 |
| Transparenz | 90,5 | 91,1 | 88,8 | 91,1 | 92,8 | 92,5 | 92,6 |
| PVC Evipol SH 5730, K-Wert 57 (ex EVC)<br>Paraloid K175/ K 120N = Acrylat Verarbeitungshilfe (ex Rohm & Haas)<br>Paraloid BTA III/ N2 = Methacrylat-Butadien-Styrol Modifier (ex Rohm & Haas)<br>Wachs E = Esterwachs/ Montanwachs (ex Clariant)<br>Loxiol G 16 = Fettsäurepartialester vom Glyzerin (ex Henkel)<br>NaP/ $H_2O$ = 30% ige Natriumperchlorat-Lösung in Wasser<br>Phosphit Mark CH 300 = gemischtes Aryl/ Alkyl-phospit (ex Crompton)<br>TEA = Triethanolamin als handelsübliches Produkt | | | | | | | |

Aus der Tabelle geht hervor, dass die erfindungsgemäßen Zusammensetzungen C 10 und C 11 gegenüber den Vergleichsmischungen eine Verbesserung der Stabilisatorwirkung bieten. Es zeigt sich außerdem, dass die Stabilisierung des Polymers durch Verwendung von Alkanolaminen in Kombination mit Uracilen durch Zugabe von Phosphiten wie im erfindungsgemäßen Beispiel C 12 ausgeführt, noch gesteigert werden kann.

Patentbeispiel 4

Die folgenden Rezepturen wurden auf einem Mischwalzwerk 5 Minuten bei 180°C gewalzt. Vom gebildeten Walzfell wurde eine Pressplatte bei 180°C in einer vorgeheizten Etagen-Plattenpresse hergestellt. Stärke der Pressplatte 1mm, Pressdauer 1 Minute. Der Yellowness Index wurde nach ASTM D-1925-70 bestimmt. Geringe YI-Werte bedeuten eine gute Stabilisierung bzw. Anfangsfarbe. Hohe Prozentwerte eine gute Transparenz. Der Kongorotwert wurde nach DIN 473/ 811/3/2 bei 200°C bestimmt. Hohe Minutenwerte bedeuten eine gute thermische Stabilität des Prüfkörpers. Die Zeit bis zum Erreichen einer Leitfähigkeit von 200 µS/cm wurde gemessen. Je größer der Wert dieses Dehydrochlorierungsversuches (DHC), umso besser ist die Stabilisierung.

| | D1 | D2 | D3 | D4 | D5 | D6 | D7 | D8 |
|---|---|---|---|---|---|---|---|---|
| PVC (Evipol SH 7020) | 100 | 100 | 100 | 100 | 100 | 100 | 100 | 100 |
| DEHP | 20 | 20 | 20 | 20 | 20 | 20 | 20 | 20 |
| Epox. Sojabohnenöl | 3,0 | 3,0 | 3,0 | 3,0 | 3,0 | 3,0 | 3,0 | 3,0 |
| NaP/ BDG | 0,2 | 0,2 | 0,2 | 0,2 | 0,2 | 0,2 | 0,2 | 0,2 |
| AC 629 A | 0,2 | 0,2 | 0,2 | 0,2 | 0,2 | 0,2 | 0,2 | 0,2 |

(fortgesetzt)

| | D1 | D2 | D3 | D4 | D5 | D6 | D7 | D8 |
|---|---|---|---|---|---|---|---|---|
| TEA | 0,2 | 0,4 | --- | --- | 0,2 | --- | --- | --- |
| Soja-diethanolamin | --- | --- | --- | --- | --- | 0,2 | 0,4 | 0,2 |
| 1,3-Dibutyl-4-aminouracil | --- | --- | 0,2 | 0,3 | 0,1 | --- | --- | 0,1 |
| Farbmessung an Pressplatte 1mm | | | | | | | | |
| Yellowness Index YI | 17,4 | 14,7 | 15,8 | 12,2 | 9,7 | 15,7 | 13,9 | 9,1 |
| Transparenz | 96,7 | 95,9 | 97,3 | 97,4 | 97,3 | 97,6 | 97,6 | 98,1 |
| Kongorot | 17 | 28 | 10 | 10 | 21 | 10 | 22 | 17 |
| DHC [200µS/cm] | 117 | 152 | 88 | 93 | 128 | 89 | 129 | 115 |

PVC Evipol 7020, K-Wert 70 (ex EVC)
DEHP = Di-2-ethylhexyl-phthalat als handelsübliches Produkt
NaP/ BDG = 30% ige Natriumperchlorat-Lösung in Butyldiglykol
TEA = Triethanolamin als handelsübliches Produkt
Soja-diethanolamin = Bis-(2-hydroxyethyl)-sojaamin als handelsübliches Produkt 1,3-Dibutyl-4-aminouracil
AC 629 A = oxidiertes Polyethylenwax (ex Honeywell)

Aus der Tabelle geht hervor, dass die erfindungsgemäßen Zusammensetzungen D5 und D8 gegenüber den Vergleichsmischungen eine Verbesserung der Stabilisatorwirkung bieten.

Patentbeispiel 5

Die Rezepturen wurden auf einem Mischwalzwerk 5 Minuten bei 180°C gewalzt. Vom gebildeten Walzfell wurde eine Pressplatte bei 180°C in einer vorgeheizten Etagen-Plattenpresse hergestellt. Stärke der Pressplatte 1mm, Pressdauer 1 Minute. Der Yellowness Index wurde nach ASTM D-1925-70 bestimmt. Geringe YI- Werte bedeuten eine gute Stabilisierung bzw. Anfangsfarbe. Hohe Prozentwerte eine gute Transparenz.

| | E1 | E 2 | E 3 | E 4 | E 5 | E 6 | E 7 | E 8 | E 9 | E10 | E11 |
|---|---|---|---|---|---|---|---|---|---|---|---|
| PVC Evipol SH 7020 | 100 | 100 | 100 | 100 | 100 | 100 | 100 | 100 | 100 | 100 | 100 |
| DEHP | 47 | 47 | 47 | 47 | 47 | 47 | 47 | 47 | 47 | 47 | 47 |
| Epox. Sojabohnenöl | 3 | 3 | 3 | 3 | 3 | 3 | 3 | 3 | 3 | 3 | 3 |
| Loxiol G 71 S | 0,3 | 0,3 | 0,3 | 0,3 | 0,3 | 0,3 | 0,3 | 0,3 | 0,3 | 0,3 | 0,3 |
| Calcium- stearat | 0,1 | 0,1 | 0,1 | 0,1 | 0,1 | 0,1 | 0,1 | 0,1 | 0,1 | 0,1 | 0,1 |
| NaP/BDG | --- | --- | --- | --- | --- | --- | --- | --- | 0,5 | 0,5 | 0,5 |
| 1,3-Dioctyl- 4-amino-uracil | --- | | 0,2 | 0,2 | | 0,2 | | 0,2 | 0,2 | 0,2 | 0,2 |
| TEA | --- | 0,2 | | 0,2 | | | | | 0,2 | | |
| Soja-di-ethanolamin | | | | | 0,2 | 0,2 | | | | 0,2 | |
| TIPA | | | | | | | 0,2 | 0,2 | | | 0,2 |

| | E1 | E 2 | E 3 | E 4 | E 5 | E 6 | E 7 | E 8 | E 9 | E10 | E11 |
|---|---|---|---|---|---|---|---|---|---|---|---|
| Farbmessung an Pressplatte 1mm | | | | | | | | | | | |
| Yellowness Index YI | 66,3 | 56,1 | 24,3 | 13,9 | 87,2 | 18,2 | 72,5 | 17,0 | 10,2 | 9,6 | 9,6 |

(fortgesetzt)

| | E1 | E 2 | E 3 | E 4 | E 5 | E 6 | E 7 | E 8 | E 9 | E10 | E11 |
|---|---|---|---|---|---|---|---|---|---|---|---|
| b-Wert | 21,9 | 23,4 | 14,2 | 10,7 | 23,9 | 10,7 | 30,4 | 10,1 | 5,7 | 5,6 | 5,8 |
| Transparenz | 74,7 | 85,2 | 97,5 | 97,8 | 66,4 | 97,8 | 84,6 | 97,9 | 96,5 | 96,8 | 97,6 |

PVC Evipol SH 7020, K-Wert 70 (ex EVC)
DEHP = Di-2ethylhexyl-phthalat als handelsübliches Produkt
NaP/ BDG = 30% ige Natriumperchlorat-Lösung in Butyldiglykol
Loxiol G 71 S = Mehrkomponentenestergleitmittel (ex Henkel)
TEA = Triethanolamin als handelsübliches Produkt
Soja-diethanolamin = ES-2 als handelsübliches Produkt
TIPA= Tri-isopropanolamin als handelsübliches Produkt

Aus der Tabelle geht hervor, dass die erfindungsgemäßen Zusammensetzungen E4, E6, E8 gegenüber den Vergleichsmischungen eine Verbesserung der Stabilisatorwirkung bieten. Es zeigt sich außerdem, dass die Stabilisierung des Polymers durch Zugabe von Perchlorat wie in den erfindungsgemäßen Beispielen E9, E10, E11 ausgeführt, noch gesteigert werden kann.

## Patentansprüche

**1.** Stabilisatormischung zur Stabilisierung von chlorhaltigen Polymeren, umfassend mindestens

a) ein Alkanolamin der Formel(I)
b) ein Uracil der Formel(II)
worin für das Alkanolamin der Formel(I)

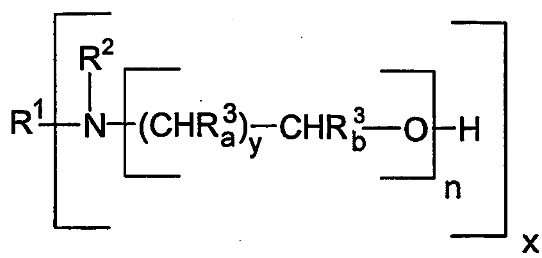

bedeuten
x = 1, 2 oder 3;
y =1,2, 3, 4, 5 oder 6;
n= 1-10;
$R^1$,$R^2$ = unabhängig voneinander H, $C_1$-$C_{22}$-Alkyl, -[-($CHR^3{}_a$)$_y$-$CHR^3{}_b$-O-]$_n$-H, -[-($CHR^3{}_a$)$_y$-$CHR^3{}_b$-O-]$_n$-CO-$R^4$, $C_2$-$C_{20}$-Alkenyl, $C_2$-$C_{18}$-Acyl, $C_4$-$C_8$-Cycloalkyl, welches in β-Stellung OH-substituiert sein kann, $C_6$-$C_{10}$-Aryl, $C_7$-$C_{10}$-Alkaryl oder $C_7$-$C_{10}$-Aralkyl, oder wenn x = 1, können $R^1$ und $R^2$ zusätzlich zusammen mit dem N einen geschlossenen 4-10 gliedrigen Ring aus Kohlenstoffatomen und gegebenenfalls bis zu 2 Heteroatomen bilden, oder wenn x = 2, kann $R^1$ zusätzlich für $C_2$-$C_{18}$-Alkylen stehen, das an beiden β-Kohlenstoffatomen mit OH substituiert und/oder durch 1 oder mehrere O-Atome und/oder 1 oder mehrere $NR^2$-Gruppen unterbrochen sein kann, oder für dihydroxysubstituiertes Tetrahydro-dicyclo-pentadienylen, dihydroxysubstituiertes Ethylcyclohexanylen, dihydroxysubstituiertes 4,4'-Bisphenol-A-dipropyl-ether)ylen, Isophoronylen, Dimethylcyclo-hexanylen, Dicyclohexylmethanylen oder 3,3'-Dimethyldicyclo-hexylmethanylen stehen, und wenn x = 3, kann $R^1$ zusätzlich für trihydroxysubstituiertes (Tri-N-propylisocyanurat)triyl stehen;
$R^3{}_a$,$R^3{}_b$ = unabhängig voneinander $C_1$-$C_{22}$-Alkyl, $C_2$-$C_6$-Alkenyl, $C_6$-$C_{10}$-Aryl, H oder $CH_2$-X-$R^5$ , wobei X = O, S, -O-CO- oder -CO-O-;
$R^4$ = $C_1$-$C_{18}$-Alkyl/Alkenyl oder Phenyl; und
$R^5$ = H, $C_1$-$C_{22}$-Alkyl, $C_2$-$C_{22}$-Alkenyl oder $C_6$-$C_{10}$-Aryl;

und für das Uracil der Formel (II) bedeutet

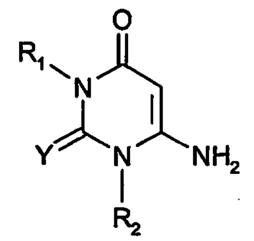

(II),

wobei
R1 und R2 unabhängig voneinander für C1-C24-Alkyl,das durch $-CO_2-$ und/ oder 1 bis mehreren Sauerstoffatomen unterbrochen und/ oder 1 bis mehreren OH Gruppen substituiert sein kann, C3-C24-Alkenyl, verzweigt oder unverzweigt, unsubstituiertes oder mit 1 bis 3 C1-C4-Alkyl-, C1-C4-Alkoxy-, C5-C8-Cycloalkyl- oder mit Hydroxygruppen oder Cl-Atomen substituiertes C5-C8-Cycloalkyl, unsubstituiertes oder am Phenylring mit 1 bis 3 C1-C4-Alkyl-, C1-C4-Alkoxy-, C5-C8-Cycloalkyl- oder mit Hydroxygruppen oder Cl-Atomen substituiertes C7-C9-Phenylalkyl darstellen, und R1 oder R2 zusätzlich für Wasserstoff stehen können, sowie Y S oder O ist.

**2.** Stabilisatormischung zur Stabilisierung von chlorhaltigen Polymeren, umfassend mindestens

a) ein Umsetzungsprodukt aus einem mono- oder polyfunktionellen Epoxid und Ammoniak oder einem mono- oder polyfunktionellen Dialkyl (Aryl)- oder Monoalkyl(Aryl)amin der Formel (I) gemäß Anspruch 1 und
b) ein Uracil der Formel (II) gemäß Anspruch 1.

**3.** Stabilisatormischung zur Stabilisierung von chlorhaltigen Polymeren, umfassend mindestens

a) ein Alkanolamin der Formel (I) gemäß Anspruch 1
b) ein Cyanacetylharnstoff der Formel(III) Formel (III)

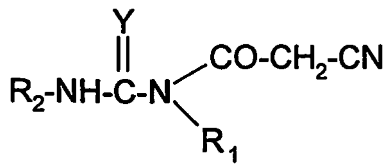

wobei
Y Sauerstoff oder Schwefel ist, und
R2 C1-C24-Alkyl, das durch $-CO_2-$ und/oder Sauerstoffatomen unterbrochen und/oder 1 bis 3 OH-Gruppen substituiert sein kann, C3-C24-Alkenyl, C7-C10-Phenylalkyl, C5-C8-Cycloalkyl, C7-C10-Alkylphenyl, Phenyl oder Naphthyl, wobei der aromatische Rest jeweils durch -OH, C1-C12-Alkyl und/oder OC1-C4-Alkyl substituiert sein kann, und R1 die Bedeutung von R2 hat oder R1 gleich Wasserstoff ist.

**4.** Stabilisatormischung zur Stabilisierung von chlorhaltigen Polymeren, umfassend mindestens

a) ein Umsetzungsprodukt aus einem mono- oder polyfunktionellen Epoxid und Ammoniak oder einem mono- oder polyfunktionellen Dialkyl (Aryl)- oder Monoalkyl(Aryl)amin der Formel (I) und
b) ein Cyanacetylharnstoff der Formel (III) gemäß Anspruch 3.

**5.** Stabilisatorgemisch gemäß Anspruch 2 und 4, wobei das polyfunktionelle Epoxid Dicyclopentadien-diepoxid, Vinylcyclohexen-diepoxid, Bisphenol-A-diglycidylether oder Trisglycidylisocyanurat und das Dialkylamin Diethanolamin oder Diisopropanolamin und das Monoalkylamin Monoethanolamin oder Monoisopropanolamin darstellt.

**6.** Stabilisatormischung nach einem der Ansprüche 1 bis 5, wobei in der Verbindung mit der allgemeinen Formel (I) $R^3_a$ und $R^3_b$ unabhängig voneinander H oder $CH_3$ sind und y = 1 ist.

**7.** Stabilisatormischung nach einem der Ansprüche 1 bis 6, wobei in der Verbindung mit der allgemeinen Formel (I) $R^1 = R^2 = CH_2\text{-}CHR^3{}_b\text{-}OH$ ist.

**8.** Stabilisatormischung nach einem der Ansprüche 1 bis 7, wobei die Verbindungen der allgemeinen Formel (I) Tris (2-hydroxy-1-propyl)amin, Tris(2-hydroxyethyl)amin, Bis(2-hydroxyethyl)-2-hydroxy-1-propyl)amin oder Alkyl/Alkenyl-bis(2-hydroxyethyl)amin, Alkyl/Alkenyl(2-hydroxy-1-propyl)amin, N-(2-Hydroxyhexadecyl)diethanolamin, N-(2-hydroxy-3-octyloxypropyl)diethanolamin, N-(2-hydroxy-3-decyloxy-propyl)diethanolamin oder Gemische hiervon sind.

**9.** Stabilisatormischung zur Stabilisierung von chlorhaltigen Polymeren, gemäß Anspruch 1 bis 8 umfassend zusätzlich mindestens ein Perchlorat Salz.

**10.** Stabilisatormischung nach einem der Ansprüche 1 bis 9, wobei das Perchlorat-Salz eine Verbindung der Formel M $(ClO_4)_n$ ist, wobei M für Li, Na, K, Mg, Ca, Sr, Ba, Zn, Al, La, Ce oder ein Hydrotalcitschichtgitterkation oder ein organisches Onium-Kation steht; n ist entsprechend der Wertigkeit von M 1, 2 oder 3 oder bei Vorliegen eines Hydrotalcitschichtgitterkations $O < n \leqq 1$.

**11.** Stabilisatormischung nach einem der Ansprüche 1 bis 10, wobei in dem Perchlorat-Salz M = Na oder K und n = 1 ist.

**12.** Stabilisatormischung gemäß einem der Ansprüche 1 bis 11, zusätzlich einen entwässerten Hydrotalcit oder einen Zeolith enthaltend.

**13.** Stabilisatormischung nach einem der Ansprüche 1 bis 12, die zusätzlich gegebenenfalls Metallseifen enthält und/oder gegebenenfalls einen weiteren Stoff aus der Gruppe der Polyole und Disaccharidalkohole, Salze der Hydroxycarbonsäuren, Glycidylverbindungen, Hydrotalcite, Alkali/Erdalkalialumosilikate, Alkali-/Erdalkali-hydroxide/oxide oder - (hydrogen)carbonate oder -carboxylate, Füllstoffe/Pigmente" Weichmacher, Antioxidantien, Lichtschutzmittel, optische Aufheller, Gleitmittel und epoxidierte Fettsäureester enthält.

**14.** Stabilisatormischung nach einem der Ansprüche 1 bis 13, wobei zusätzlich ein Phosphit enthalten ist und/oder mögliche Reaktionsprodukte von Phosphit mit der Komponente Formel(I)oder dem Perchlorat-Salz.

**15.** Stabilisatormischung nach einem der Ansprüche 1 bis 14, wobei das zusätzliche Phosphit Distearylpentaerythritdiphosphit, Triphenylphosphit, Trisnonylphenylphosphit, Phenyldidecylphosphit, Poly(dipropylenglykol)phenylphosphit, Tetraphenyl-dipropylenglykol-diphosphit, Tetra-isodecyldipropylenglykol-diphosphit, Tris-dipropylenglykolphosphit, Decyldiphenylphosphit, Trioctylphosphit, Trilaurylphosphit oder (Nonylphenyl$_{1,5}$-$C_{12}$/$C_{13}$-alkyl)$_{1,5}$-phosphit ist.

**16.** Zusammensetzung, enthaltend ein chlorhaltiges Polymer und eine Stabilisatormischung nach einem der Ansprüche 1 bis 15.

**17.** Zusammensetzung nach Anspruch 1 bis 16, **dadurch gekennzeichnet, daß** bezogen auf 100 Gew.-Teile chlorhaltiges Polymer, 0,01-10 Gew.-Teile der Verbindung der allgemeinen Formel (I) und 0,01-10 Gew.-Teile der Verbindung der allgemeinen Formel (II) enthalten sind.

**18.** Zusammensetzung nach Anspruch 1 bis 16, **dadurch gekennzeichnet, daß** bezogen auf 100 Gew.-Teile chlorhaltiges Polymer, 0,01-10 Gew.-Teile der Verbindung der allgemeinen Formel (I) und 0,01-10 Gew.-Teile der Verbindung der allgemeinen Formel (III) enthalten sind.

**19.** Zusammensetzung nach Anspruch 17 oder 18, **dadurch gekennzeichnet, dass** bezogen auf 100 Gew.-Teile chlorhaltiges Polymer zusätzlich 0,001- 5 Gew.-Teile des Perchlorat-Salzes enthalten sind.

**20.** Zusammensetzung nach Anspruch 19, **dadurch gekennzeichnet, dass** bezogen auf 100 Gew.-Teile chlorhaltiges Polymer, zusätzlich 0,05-5 Gew.-Teile eines Phosphits enthalten sind.

**21.** Verfahren zur Stabilisierung von chlorhaltigen Polymeren durch Zusatz einer Stabilisatormischung nach einem der Ansprüche 1 bis 15 zu einem chlorhaltigen Polymer.

**22.** Verfahren zur Stabilisierung von chlorhaltigen Polymeren gemäß Anspruch 21, **dadurch gekennzeichnet, dass** das chlorhaltige Polymer Weich-PVC darstellt.

**23.** Verfahren zur Stabilisierung von chlorhaltigen Polymeren gemäß Anspruch 21, **dadurch gekennzeichnet, daß** das Weich-PVC zur Herstellung von Fußböden, KFZ-Teilen, Weich-Folien, Schläuchen, Spritzgußteilen oder Drahtummantelung dient.

**24.** Verfahren zur Stabilisierung von chlorhaltigen Polymeren gemäß Anspruch 21, **dadurch gekennzeichnet, dass** das chlorhaltige Polymer Hart-PVC darstellt.

**25.** Verfahren zur Stabilisierung von chlorhaltigen Polymeren gemäß Anspruch 21, **dadurch gekennzeichnet, dass** das chlorhaltige Polymer zur Herstellung von Folien (auch Luvitherm), PVC-Rohren oder Profilen dient.

**26.** Gebrauchsgegenstände, enthaltend PVC, welches durch eine Stabilisatormischung nach einem der Ansprüche 1 bis 15 stabilisiert ist.

## Claims

**1.** A stabilizer mixture for stabilizing chlorine-containing polymers, encompassing at least

a) one alkanolamine of the formula (I)
b) one uracil of the formula (II)

where, for the alkanolamine of the formula (I)

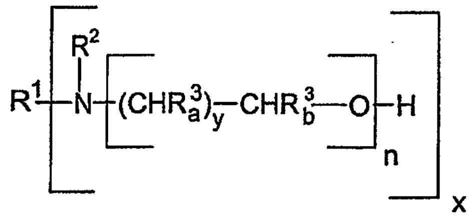

x = 1, 2 or 3;
y = 1, 2, 3, 4, 5 or 6;
n = from 1 to 10;
$R^1$ and $R^2$ = independently of one another H, $C_1$-$C_{22}$-alkyl, -[-($CHR^3_a$)$_y$-$CHR^3_b$-O-]$_n$-H, -[-($CHR^3_a$)$_y$-$CHR^3_b$-O-]$_n$-CO-$R^4$, $C_2$-$C_{20}$-alkenyl, $C_2$-$C_{18}$-acyl, $C_4$-$C_8$-cycloalkyl, where this may have OH substitution in the β-position, $C_6$-$C_{10}$-aryl, $C_7$-$C_{10}$-alkaryl or $C_7$-$C_{10}$-aralkyl, or, if x = 1, $R^1$ and $R^2$ may also, together with the N, form a closed ring having from 4 to 10 members, composed of carbon atoms and, where appropriate, of up to 2 heteroatoms, or if x = 2, $R^1$ may also be $C_2$-$C_{18}$-alkylene which, at both β-carbon atoms, may have OH substitution and/or have interruption by one or more O atoms and/or by one or more $NR^2$ groups, or be dihydroxy-substituted tetrahydrodicyclopentadienylene, dihydroxy-substituted ethylcyclohexanylene, dihydroxy-substituted 4,4'-(bisphenol A dipropyl ether)ylene, isophoronylene, dimethylcyclohexanylene, dicyclohexylmethanylene or 3,3'-dimethyldicyclohexylmethanylene, and if x = 3, $R^1$ may also be trihydroxy-substituted (tri-N-propyl isocyanurate)triyl;
$R^3_a$ a and $R^3_b$ = independently of one another $C_1$-$C_{22}$-alkyl, $C_2$-$C_6$-alkenyl, $C_6$-$C_{10}$-aryl, H or $CH_2$-X-$R^5$, where X = O, S, -O-CO- or -CO-O-;
$R^4$ = $C_1$-$C_{18}$-alkyllalkenyl or phenyl; and
$R^5$ = H, $C_1$-$C_{22}$-alkyl, $C_2$-$C_{22}$-alkenyl or $C_6$-$C_{10}$-aryl;
and for the uracil of the formula (II)

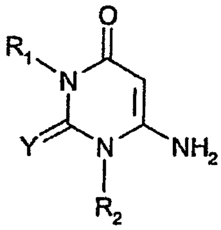 (II),

R1 and R2, independently of one another, are C1-C24-alkyl, which may have interruption by $-CO_2-$ and/or by 1 or more oxygen atoms, and/or may have substitution by one or more OH groups, or are C3-C24-alkenyl, branched or unbranched, or are C5-C8-cycloalkyl, unsubstituted or substituted with from 1 to 3 C1-C4-alkyl, C1-C4-alkoxy, or C5-C8-cycloalkyl groups, or with hydroxy groups, or with C1 atoms, or are C7-C9-phenylalkyl, unsubstituted or substituted on the phenyl ring with from 1 to 3 C1-C4-alkyl, C1-C4-alkoxy, or C5-C8-cycloalkyl groups, or with hydroxy groups, or with C1 atoms, and R1 or R2 may also be hydrogen, and Y is S or O.

2. A stabilizer mixture for stabilizing chlorine-containing polymers, encompassing at least

a) one reaction product of a mono- or polyfunctional epoxide and of ammonia or of a mono- or polyfunctional dialkyl(aryl)- or monoalkyl(aryl)amine of the formula (I) as claimed in claim 1 and
b) one uracil of the formula (II) as claimed in claim 1.

3. A stabilizer mixture for stabilizing chlorine-containing polymers, encompassing at least

a) one alkanolamine of the formula (I) as claimed in claim 1
b) one cyanoacetylurea of the formula (III) formula (III)

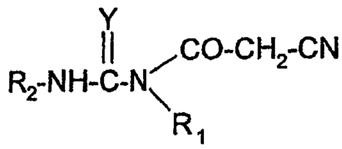

where

Y is oxygen or sulfur, and
R2 is Cl-C24-alkyl, which may have interruption by $-CO_2-$ and/or by oxygen atoms, and/or may have substitution by from 1 to 3 OH groups, or is C3-C24-alkenyl, C7-C10-phenylalkyl, C5-C8-cycloalkyl, C7-C10-alkylphenyl, phenyl or naphthyl, where in each case the aromatic radical may have substitution by -OH, C1-C12-alkyl and/or OC1-C4-alkyl, and R1 is as defined for R2, or R1 is hydrogen.

4. A stabilizer mixture for stabilizing chlorine-containing polymers, encompassing at least

a) one reaction product of a mono- or polyfunctional epoxide and of ammonia or of a mono- or polyfunctional dialkyl(aryl)- or monoalkyl(aryl)amine of the formula (I), and
b) a cyanoacetylurea of the formula (III) as claimed in claim 3.

5. The stabilizer mixture as claimed in claim 2 and 4, where the polyfunctional epoxide is dicyclopentadiene diepoxide, vinylcyclohexene diepoxide, bisphenol A diglycidyl ether, or tris-glycidyl isocyanurate, and the dialkylamine is diethanolamine or diisopropanolamine, and the monoalkylamine is monoethanolamine or monoisopropanolamine.

6. The stabilizer mixture as claimed in any of claims 1 to 5, where, in the compound with the general formula (I), $R^3_a$ and $R^3_b$, independently of one another, are H or $CH_3$ and y = 1.

7. The stabilizer mixture as claimed in any of claims 1 to 6, where, in the compound with the general formula (I),

$R^1 = R^2 = CH_2\text{-}CHR^3{}_b\text{-}OH$.

**8.** The stabilizer mixture as claimed in any of claims 1 to 7, where the compounds of the general formula (I) are tris(2-hydroxy-1-propyl)amine, tris(2-hydroxyethyl)amine, bis(2-hydroxyethyl)-2-hydroxy-1-propyl)amine, or alkyl/alkenyl-bis-(2-hydroxyethyl)amine, alkyl/alkenyl(2-hydroxy-1-propyl)amine, N-(2-hydroxyhexadecyl)diethanolamine, N-(2-hydroxy-3-octyloxypropyl)diethanolamine, N-(2-hydroxy-3-decyloxypropyl)diethanolamine, or a mixture thereof.

**9.** The stabilizer mixture for stabilizing chlorine-containing polymers, as claimed in any of claims 1 to 8, also encompassing at least one perchlorate salt.

**10.** The stabilizer mixture as claimed in any of claims 1 to 9, where the perchlorate salt is a compound of the formula $M(ClO_4)_n$, where M is Li, Na, K, Mg, Ca, Sr, Ba, Zn, Al, La, Ce, or a hydrotalcite layer-lattice cation, or an organic onium cation; n is 1, 2 or 3, as appropriate for the valency of M, or if a hydrotalcite layer-lattice cation is present $0 < n \leqq 1$.

**11.** The stabilizer mixture as claimed in any of claims 1 to 10, where, in the perchlorate salt, M = Na or K, and n = 1.

**12.** The stabilizer mixture as claimed in any of claims 1 to 11, also comprising an anhydrous hydrotalcite or a zeolite.

**13.** The stabilizer mixture as claimed in any of claims 1 to 12, which also, if appropriate, comprises metal soaps, and/or, if appropriate, comprises another substance from the group of the polyols and disaccharide alcohols, salts of the hydroxycarboxylic acids, glycidyl compounds, hydrotalcites, aluminosilicates of alkali metals or of alkaline earth metals, hydroxides/oxides of alkali metals or of alkaline earth metals, or the corresponding (hydrogen)carbonates or carboxylates, and fillers/pigments, plasticizers, antioxidants, light stabilizers, optical brighteners, lubricants and epoxidized fatty acid esters.

**14.** The stabilizer mixture as claimed in any of claims 1 to 13, where a phosphite is also present, and/or possible reaction products of phosphite with the component of formula (I) or with the perchlorate salt are present.

**15.** The stabilizer mixture as claimed in any of claims 1 to 14, where the additional phosphite is distearyl pentaerythrityl diphosphite, triphenyl phosphite, trisnonylphenyl phosphite, phenyl didecyl phosphite, poly(dipropylene glycol) phenyl phosphite, tetraphenyl dipropylene glycol diphosphite, tetraisodecyl dipropylene glycol diphosphite, trisdipropylene glycol phosphite, decyl diphenyl phosphite, trioctyl phosphite, trilauryl phosphite or nonylphenyl$_{1.5}$ $C_{12}/C_{13}$-alkyl$_{1.5}$ phosphite.

**16.** A composition, comprising a chlorine-containing polymer and the stabilizer mixture as claimed in any of claims 1 to 15.

**17.** The composition as claimed in any of claims 1 to 16, **characterized in that** it comprises, based on 100 parts by weight of chlorine-containing polymer, from 0.01 to 10 parts by weight of the compound of the general formula (I) and from 0.01 to 10 parts by weight of the compound of the general formula (II).

**18.** The composition as claimed in any of claims 1 to 16, **characterized in that** it comprises, based on 100 parts by weight of chlorine-containing polymer, from 0.01 to 10 parts by weight of the compound of the general formula (I) and from 0.01 to 10 parts by weight of the compound of the general formula (III).

**19.** The composition as claimed in claim 17 or 18, **characterized in that** it also comprises, based on 100 parts by weight of chlorine-containing polymer, from 0.001 to 5 parts by weight of the perchlorate salt.

**20.** The composition as claimed in claim 19, **characterized in that** it also comprises, based on 100 parts by weight of chlorine-containing polymer, from 0.05 to 5 parts by weight of a phosphite.

**21.** A process for stabilizing chlorine-containing polymers via addition of the stabilizer mixture as claimed in any of claims 1 to 15 to a chlorine-containing polymer.

**22.** The process for stabilizing chlorine-containing polymers as claimed in claim 21, **characterized in that** the chlorine-containing polymer is plasticized PVC.

**23.** The process for stabilizing chlorine-containing polymers as claimed in claim 21, **characterized in that** the plasticized PVC serves for production of floorcoverings, motor vehicle components, plasticized foils, hoses, injection moldings,

or wire sheathing.

**24.** The process for stabilizing chlorine-containing polymers as claimed in claim 21, **characterized in that** the chlorine-containing polymer is unplasticized PVC.

**25.** The process for stabilizing chlorine-containing polymers as claimed in claim 21, **characterized in that** the chlorine-containing polymer serves for production of foils (among which is Luvitherm), or of PVC pipes, or of profiles.

**26.** A consumer item, comprising PVC, which has been stabilized via the stabilizer mixture as claimed in any of claims 1 to 15.

**Revendications**

**1.** Composition de stabilisant pour la stabilisation de polymères chlorés, comprenant au moins

a) une alcanolamine de formule (I)
b) un uracile de formule (II)

dans laquelle, en ce qui concerne l'alcanolamine de formule (I)

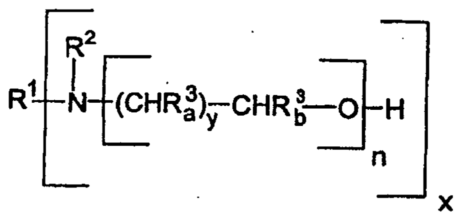

x est égal à 1, 2 ou 3 ;
y est égal à 1, 2, 3, 4, 5 ou 6 ;
n va de 1 à 10 ;
$R^1$, $R^2$ représentent, indépendamment l'un de l'autre, H, un groupe alkyle en $C_1$-$C_{22}$,
$-[-(CHR^3{}_a)_y-CHR^3{}_b-O-]_n-H$,
$-[-(CHR^3{}_a)_y-CHR^3{}_b-O-]_n-CO-R^4$, alcényle en $C_2$-$C_{20}$, acyle en $C_2$-$C_{18}$, cycloalkyle en $C_4$-$C_8$, qui peut être substitué par OH en position β, aryle en $C_6$-$C_{10}$, alkaryle en $C_7$-$C_{10}$ ou aralkyle en $C_7$-$C_{10}$, ou lorsque x = 1, $R^1$ et $R^2$ peuvent en outre former conjointement avec d'atome d'azote un cycle fermé à 4-10 chaînons, à base d'atomes de carbone et éventuellement de jusqu'à 2 hétéroatomes, ou lorsque x = 2, $R^1$ peut en outre représenter un groupe alkylène en $C_2$-$C_{18}$ qui peut être substitué par OH sur les deux atomes de carbone β et/ou être interrompu par 1 ou plusieurs atomes d'oxygène et/ou 1 ou plusieurs groupes $NR^2$, ou représentent un groupe tétrahydro-dicyclo-pentadiénylène, disubstitué par hydroxy, éthylcyclohexanylène disubstitué par hydroxy, 4,4'-bisphénol-A-dipropyl-éther)ylène disubstitué par hydroxy, isophoronylène, diméthyldicyclo-hexanylène, dicyclohexylméthanylène ou 3,3'-diméthyldicyclohexylméthanylène, et lorsque w = 3, $R^1$ peut en outre représenter un groupe (tri-N-propylisocyanurate)triyl trisubstitué par hydroxy ;
$R^3{}_a$, $R^3{}_b$ représentent, indépendamment l'un de l'autre, un groupe alkyle en $C_1$-$C_{22}$, alcényle en $C_2$-$C_6$, aryle en $C_6$-$C_{10}$, H ou $CH_2$-X-$R^5$, X représentant O ou S,
-O-CO- ou-CO-O- ;
$R^4$ représente un groupe alkyl/alcényle en $C_1$-$C_{18}$ ou phényle ; et
$R^5$ représente H, un groupe alkyle en $C_1$-$C_{22}$, alcényle en $C_2$-$C_{22}$ ou aryle en $C_6$-$C_{10}$ ;
et en ce qui concerne l'uracile de formule (II)

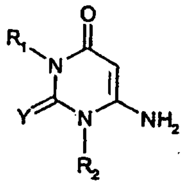 (II),

R1 et R2 représentent, indépendamment l'un de l'autre, un groupe alkyle en $C_1$-$C_{24}$ qui peut être interrompu par -$CO_2$- et/ou par 1 ou plusieurs atomes d'oxygène et/ou substitué par 1 ou plusieurs groupes OH, un groupe alcényle en $C_3$-$C_{24}$, un groupe cycloalkyle en $C_5$-$C_8$ ramifié ou non ramifié, non substitué ou substitué par 1 à 3 groupes alkyle en $C_1$-$C_4$, alcoxy en $C_1$-$C_4$, cycloalkyle en $C_5$-$C_8$, un groupe phénylalkyle en $C_7$-$C_9$ on substitué ou substitué sur le cycle phényle par 1 à 3 groupes alkyle en $C_1$-$C_4$, alcoxy en $C_1$-$C_4$, cycloalkyle en $C_5$-$C_8$ ou par des groupes hydroxy ou des atomes de C1, et R1 ou R2 peut en outre représenter un atome d'hydrogène, et Y est S ou O.

**2.** Composition de stabilisant pour la stabilisation de polymères chlorés, comprenant au moins

a) un produit de réaction d'un époxyde mono- ou polyfonctionnel et d'ammoniac ou d'une dialkyl(aryl)amine ou monoalkyl(aryl)amine mono- ou polyfonctionnelle de formule (I) selon la revendication 1 et
b) un uracile de formule (II) selon la revendication 1.

**3.** Composition de stabilisant pour la stabilisation de polymères chlorés, comprenant au moins

a) une alcanolamine de formule (I) selon la revendication 1
b) une cyanoacétylurée de formule (III) formule (III)

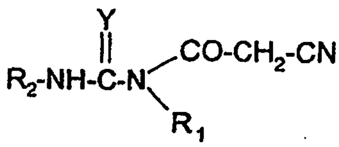

dans laquelle

Y est un atome d'oxygène ou de soufre, et
R2 est un groupe alkyle en $C_1$-$C_{24}$ qui peut être interrompu par -$CO_2$- et/ou par des atomes d'oxygène et/ou substitué par 1 à 3 groupes OH, un groupe alcényle en $C_3$-$C_{24}$, phénylalkyle en $C_7$-$C_{10}$, cycloalkyle en $C_5$-$C_8$, alkylphényle en $C_7$-$C_{10}$, phényle ou naphtyle, le radical aromatique pouvant être chaque fois substitué par -OH, alkyle en $C_1$-$C_{12}$ et/ou O-alkyle($C_1$-$C_4$), et R1 a la signification de R2 ou R1 est un atome d'hydrogène.

**4.** Composition de stabilisant pour la stabilisation de polymères chlorés, comprenant au moins

a) un produit de réaction d'un époxyde mono- ou polyfonctionnel et d'ammoniac ou d'une dialkyl(aryl)amine ou monoalkyl(aryl)amine mono- ou polyfonctinnelle de formule (I) et
b) une cyanoacétylurée de formule (III) selon la revendication 3.

**5.** Composition de stabilisant selon la revendication 2 ou 4, dans laquelle l'époxyde polyfonctionnel représente le dicyclopentadiène-diépoxyde, le vinyl-cyclohexène-diépoxyde, l'éther diglycidylique de bisphénol A ou le diisocyanurate de trisglycidyle et la dialkylamine représente la diéthanolamine ou la diisopropylamine et la monoalkylamine représente la monoéthanolamine ou la mono-isopropanolamine.

**6.** Composition de stabilisant selon l'une quelconque des revendications 1 à 5, dans laquelle, dans le composé de formule générale (I)
$R^3_a$ et $R^3_b$ représentent, indépendamment l'un de l'autre, H ou $CH_3$ et y = 1.

**7.** Composition de stabilisant selon l'une quelconque des revendications 1 à 6, dans laquelle, dans le composé de

formule générale (I)
$R^1 = R^2 = CH_2\text{-}CHR^3{}_b\text{-}OH$.

**8.** Composition de stabilisant selon l'une quelconque des revendications 1 à 7, dans laquelle, dans le composé de formule générale (I) sont la tris(2-hydroxy-1-propyl)amine, la tris(2-hydroxyéthyl)-amine, la bis(2-hydroxyéthyl)-2-hydroxy-1-propyl)amine, ou une alkyl/alcényl-bis(2-hydroxyéthyl)amine, alkyl/alcényl(2-hydroxy-1-propyl)amine, la N-(2-hydroxyhexadécyl)-diéthanolamine, la N-(2-hydroxy-3-octyloxypropyl)-diéthanolamine, la N-(2-hydroxy-3-décyloxypropyl)diéthanolamine ou des mélanges de ceux-ci.

**9.** Composition de stabilisant pour la stabilisation de polymères chlorés, selon l'une quelconque des revendications 1 à 8, comprenant en outre au moins un sel perchlorate.

**10.** Composition de stabilisant selon l'une quelconque des revendications 1 à 9, dans laquelle le sel perchlorate est un composé de formule $M(ClO_4)_n$, dans laquelle M représente Li, Na, K, Mg, Ca, Sr, Ba, Zn, Al, La, Ce ou un cation de réseau de couche d'hydrotalcite ou un cation onium ; n est 1, 2 ou 3 en fonction de la valence de M ou, dans la cas de la présence d'un cation de couche d'hydrotalcite, 0 < n s 1.

**11.** Composition de stabilisant selon l'une quelconque des revendications 1 à 10, dans laquelle, dans le sel perchlorate M = Na ou K et n = 1.

**12.** Composition de stabilisant selon l'une quelconque des revendications 1 à 11, contenant en outre une hydrotalcite déshydratée ou une zéolithe.

**13.** Composition de stabilisant selon l'une quelconque des revendications 1 à 12, contenant en outre éventuellement des savons métalliques et/ou éventuellement un autre substance choisie dans le groupe des polyols et des alcools disaccharidiques, des sels des acides hydroxycarboxyliques, des composés glycidyliques, des hydrotalcites, des aluminosilicates de métaux alcalins/alcalino-terreux, des oxydes/hydroxydes ou (hydrogéno)carbonates ou carboxylates de métaux alcalins/alcalino-terreux, des charges/pigments, des plastifiants, des antioxydants, des photoprotecteurs, des azurants optiques, des lubrifiants et des esters d'acides gras époxydés.

**14.** Composition de stabilisant selon l'une quelconque des revendications 1 à 13, contenant en outre un phosphite et/ou d'éventuels produits de réaction de phosphite avec le composant de formule (I) ou le sel perchlorate.

**15.** Composition de stabilisant selon l'une quelconque des revendications 1 à 14, dans laquelle le phosphite supplémentaire est le diphosphite de distéarylpentaérythritol, le phosphite de triphényle, le phosphite de trisnonylphényle, le phosphite de phényle et didécyle, le phosphite de poly(dipropylèneglycol)phényle, le diphosphite de tétraphényldipropylèneglycol, le diphosphite de tétra-isodécyl-dipropylèneglycol, le phosphite de tris-dipropylèneglycol, le phosphite de décyle et diphényle, le phosphite de trioctyle, le phosphite de trilauryle ou le phosphite de (nonylphényle$_{1,5}$-alkyle $(C_{12}/C_{13})_{1,5}$).

**16.** Composition contenant un polymère chloré et une composition de stabilisant selon l'une quelconque des revendications 1 à 15.

**17.** Composition selon l'une quelconque des revendications 1 à 16, **caractérisée en ce que** sont contenues, par rapport à 100 parties en poids de polymère chloré, 0,01-10 parties en poids du composé de formule générale (I) et 0,01-10 parties en poids du composé de formule générale (II).

**18.** Composition selon l'une quelconque des revendications 1 à 16, **caractérisée en ce que** sont contenues, par rapport à 100 parties en poids de polymère chloré, 0,01-10 parties en poids du composé de formule générale (I) et 0,01-10 parties en poids du composé de formule générale (III).

**19.** Composition selon la revendication 17 ou 18, **caractérisée en ce que** sont en outre contenues, par rapport à 100 parties en poids de polymère chloré, 0,001-5 parties en poids du sel perchlorate.

**20.** Composition selon la revendication 19, **caractérisée en ce que** sont en outre contenues, par rapport à 100 parties en poids de polymère chloré, 0,05-5 parties en poids d'un phosphite.

**21.** Procédé pour la stabilisation de polymères chlorés, par addition à un polymère chloré d'une composition de stabilisant

selon l'une quelconque des revendications 1 à 15.

**22.** Procédé pour la stabilisation de polymères chlorés selon la revendication 21, **caractérisé en ce que** le polymère chloré représente du PVC souple.

**23.** Procédé pour la stabilisation de polymères chlorés selon la revendication 21, **caractérisé en ce que** le PVC souple sert à la production de sols, de pièces d'automobiles, de films souples, de tuyaux souples, de pièces moulées par injection ou de gaines de fils.

**24.** Procédé pour la stabilisation de polymères chlorés selon la revendication 21, **caractérisé en ce que** le polymère chloré représente du PVC rigide.

**25.** Procédé pour la stabilisation de polymères chlorés selon la revendication 21, **caractérisé en ce que** le polymère chloré sert à la fabrication de films (également procédé Luvitherm), de tubes en PVC ou de profilés.

**26.** Objets d'usage courant, comportant du PVC qui est stabilisé par une composition de stabilisant selon les revendications 1 à 15.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0248249 A2
- DE 1694873 A
- EP 0065934 A
- EP 0041479 A
- EP 0768336 A
- US 2598936 A
- US 6211270 B
- EP 0394547 A
- EP 0457471 A
- WO 9424200 A
- JP 61009451 A
- WO 9213914 A
- WO 9325613 A
- DE 3941902
- DE 4106411
- EP 0761756 A
- DE 4425275 A
- WO 0206389 A
- DE 3843581
- US 4000100 A
- EP 0062813 A
- WO 9320135 A
- DE 2424763
- WO 02098964 A
- US 4060512 A
- US 3243394 A
- EP 0108023 A
- EP 0259783 A
- WO 02060884 A1
- DE 3004660 A
- US 895966 A2
- WO 0205206 A
- DE 19756913
- DE 19927977
- DE 19927978
- DE 19927979
- DE 4031818 A
- DE 19741778
- EP 99105418 A


### In der Beschreibung aufgeführte Nicht-Patentliteratur


- **H. ZWEIFEL.** Plastics Additives Handbook. Carl Hanser Verlag, 2001, 427-483
- **W. BECKER ; D. BRAUN.** *Kunststoff Handbuch PVC,* 1985, vol. 2/1, 531-538
- **KIRK-OTHMER.** *Encyclopedia of Chemical Technology,* 1994, vol. 12, 1071-1091
- **KIRK-OTHMER.** *Alkanolamines,* vol. 2
- *J.Org.Chem.,* 1951, vol. 16, 1897-1890
- **E. J. WICKSON.** Handbook of PVC-Formulating. John Wiley & Sons, 1993
- Ullmann's Encyclopedia of Industrial Chemistry. 1986, vol. A5, 505 ff
- **KIRK-OTHMER.** *Encyclopedia of Chemical Technology,* 1993, vol. 5, 572 ff
- **P. BARNES.** Structure and Performance of Cements. *Appl. Sci. Publ. N. Y.,* 1983
- **F. M. LEA.** *The Chemistry of Cement and Concrete,* 1971
- **H. F. W. TAYLOR.** Cement Chemistry. Acad. Press, 1992, 167 ff
- **C. COHEN-ADDAD ; P. DUCROS.** *Acta Cryst.,* 1967, vol. 23, 220-225
- HANDBOOK OF PVC FORMULATING. John Wiley & Sons, Inc, 1993, 393-449
- **R. GÄCHTER ; H. MÜLLER.** TASCHENBUCH der Kunststoffadditive. 1990, 549-615
- *Ullmanns Encyclopedia of Industrial Chemistry,* 1985, vol. A16, 361 ff
- Plastics Additives Handbook. Carl Hanser Verlag, 2001, 511-552
- **R. GÄCHTER ; H. MÜLLER.** Kunststoffadditive. Carl Hanser Verlag, 1989, 412-415
- **W. V. TITOW.** PVC Technology. Elsevier Publ, 1984, 165-170
- **E. J.WICKSON.** Handbook of PVC Formulating. John Wiley & Sons, 1993
- **R. GÄCHTER ; H. MÜLLER.** KunststofFadditive. Carl Hanser Verlag, 1989
- **H. ZWEIFEL.** Plastics Additives Handbook. Carl Hanser Verlag, 2001
- **E. J. WILSON.** Handbook of Polyvinyl Chloride Formulating. J. Wiley & Sons, 1993
- **G. PRITCHARD ; CHAPMAN ; HALL.** Plastics Additives. 1998
- **J. T. LUTZ ; D. L. DUNKELBERGER.** Impact Modifiers for PVC. John Wiley & Sons, 1992
- **R. GÄCHTER ; H. MÜLLER.** Kunststoffadditive. Carl Hanser Verlag, 1989

- **W. BECKER ; H. BRAUN.** Kunststoffhandbuch PVC. Carl Hanser Verlag, 1985, vol. 2/2, 1236-1277